# EUROPÄISCHE PATENTSCHRIFT

(11) **EP 3 459 983 B1**
(45) Veröffentlichungstag und Bekanntmachung des Hinweises auf die Patenterteilung: **04.10.2023**
(21) Anmeldenummer: 18191360.9
(22) Anmeldetag: 29.08.2018
(51) Int. Cl.: C08G 18/48, C08G 18/66, C08G 18/76, C08G 18/18, C08G 18/32, C08K 9/12, C08K 5/31, C08G 101/00

(54) **HERSTELLUNG VON POLYURETHANSYSTEMEN**
MANUFACTURE OF POLYURETHANE SYSTEMS
FABRICATION DE SYSTÈMES POLYURÉTHANE

(30) Priorität: 25.09.2017 EP 17192836
(43) Veröffentlichungstag der Anmeldung: 27.03.2019
(73) Patentinhaber: Evonik Operations GmbH, 45128 Essen (DE)
(72) Erfinder: Emmrich-Smolczyk, Eva, 45133 Essen (DE); Vidakovic, Mladen, 47269 Duisburg (DE); Feldmann, Kai-Oliver, 45133 Essen (DE); Terheiden, Annegret, 46519 Alpen (DE)
(74) Vertreter: Evonik Patent Association

(56) Entgegenhaltungen:
- WO-A1-2015/071063
- CN-A- 105 368 288
- US-A1- 2010 297 053
- US-B1- 6 540 936

## Beschreibung

Die Erfindung liegt auf dem Gebiet der Polyurethane und betrifft insbesondere ein Verfahren zur Herstellung von Polyurethanschaum durch Umsetzung mindestens einer Polyolkomponente mit mindestens einer Isocyanatkomponente in Gegenwart eines oder mehrerer Katalysatoren, die die Reaktionen Isocyanat-Polyol und/oder Isocyanat-Wasser und/oder die Isocyanat-Trimerisierung katalysieren, wobei die Umsetzung in Gegenwart eines Trägermaterials und von Polyamin P nach Maßgabe von Anspruch 1 durchgeführt wird, wobei als Trägermaterial z.B. pyrogene Kieselsäure verwendet wird, sowie entsprechend hergestellten Polyurethanschaum.

Polyurethansysteme im Sinne dieser Erfindung sind Polyurethanschäume/-schaumstoffe.

Polyurethane finden aufgrund ihrer hervorragenden mechanischen und physikalischen Eigenschaften in den verschiedensten Bereichen Verwendung. Einen besonders wichtigen Markt für verschiedenste Typen von Polyurethanen stellt der Bereich der Schäume dar, wie konventionelle Weichschäume auf Ether- und Esterpolyolbasis, Kaltschäume (häufig auch als HR-Schäume bezeichnet), Hartschäume, Integralschäume und mikrozellulare Schäume, sowie Schäume deren Eigenschaften zwischen diesen Klassifizierungen liegen, wie z. B. halbharte Systeme, stellt die Automobil- und die Möbelindustrie dar. Es werden z. B. Hartschäume als Dachhimmel, Esterschäume zur Innenverkleidung der Türen sowie für ausgestanzte Sonnenblenden, Kalt- und Weichschäume für Sitzsysteme und Matratzen verwendet. Aber auch Klebstoffe und Beschichtungen sind ein Einsatzbereich für Polyurethane, in dem diese durch herausragende Eigenschaften überzeugen.

Problematisch bei der Herstellung und Lagerung von Polyurethanschäumen ist die Freisetzung von Aldehyden. Viele Verbraucher wollen wegen gesundheitlicher Bedenken aldehyd-emittierende Produkte nach Möglichkeit nicht mehr verwenden, unabhängig davon, ob gesundheitliche Bedenken tatsächlich gerechtfertigt sind.

Außerdem haben in der letzten Zeit vor allem die chinesischen Behörden die Anforderungen erhöht und verlangen z. B. sehr strenge Grenzwerte für Innenraumemissionen für in China verkaufte Autos. Besonderer Fokus liegt hier, neben aromatischen Kohlenwasserstoffen, wiederum auf den Aldehyden. Es besteht somit ganz allgemein der Wunsch nach solchen Polyurethanschäumen, welche so wenige Aldehyde wie möglich freisetzen.

Um diesem Wunsch zu entsprechen, gab es bereits unterschiedliche Ansätze. So geht die WO 2009/117479 davon aus, dass der Formaldehyd aus dem Rohstoff stammt und insbesondere in den eingesetzten Amin-Katalysatoren (tertiären Aminen) enthalten sein soll. Diese Schrift schlägt zum Erreichen niedriger Formaldehyd-Emissionen deshalb vor, dem tertiären Amin-Katalysator ein primäres Amin zuzugeben. Vorzugsweise wird Dimethylaminopropylamin eingesetzt.

DE 10003156 A1 beschäftigt sich nicht unmittelbar mit emissionsarmen Schaumstoffen, sondern mit der Aufgabe, Polymere mit hervorragenden Adsorptionsfähigkeiten für verschiedene Verbindungen, insbesondere für Schwermetallionen zu entwickeln. Zur Lösung dieser Aufgabe werden dann Polyurethanschaumstoffe vorgeschlagen, die Ethylenimin, Polyethylenimin, Polyvinylamin, carboxymethylierte Polyethylenimine, phosphonomethylierte Polyethylenimine, quarternisierte Polyethylenimine und/oder dithiocarbamitisierte Polyethylenimine enthalten. Diese Polyurethanschaumstoffe können auch zur Adsorption organischer Substanzen wie bspw. Formaldehyd eingesetzt werden.

DE 10258046 A1 beschäftigt sich mit der Aufgabe, Polyurethanschaumstoffe herzustellen, die einen reduzierten Gehalt an Formaldehydemission aufweisen. Im Unterschied zu DE 10003156 A1 liegt die Aufgabe der DE 10258046 A1 also in der Reduzierung der Formaldehydemissionen aus dem PUR-Schaumstoff als solchen, und nicht in der Adsorption von Formaldehyd aus der Umgebungsluft. Zur Lösung dieser Aufgabe wird dann ein Verfahren vorgeschlagen, dass die Zugabe von Aminogruppen aufweisenden Polymeren zu dem Polyurethanschaumstoff vorsieht, wobei die Zugabe vor und/oder während der Herstellung des Polyurethanschaumstoffs erfolgen kann.

WO 2015/071063 A1 offenbart ein Verfahren zur Reduzierung der Aldehydemission in PU-Schäumen, welches darauf basiert, dass die Reaktionsmischung eine Verbindung enthält, die durch Umsetzung eines Polyamins mit einem Guanidinsalz erhalten wird.

Im Rahmen der vorliegenden Erfindung wurde allerdings festgestellt, dass je nach verwendeter Polyurethanrezeptur die Verwendung aldehydfangender Substanzen zu Schaumstörungen führen kann und unter Umständen auch Auswirkungen auf den Wirkungsgrad der Aldehydabsorption haben kann. Bei Einsatz aus dem Stand der Technik bekannter aldehydfangender Substanzen kann die Verarbeitbarkeit der Schäume unter bestimmten Umständen leiden und besonders können sich die Werte für die Aufdrückbarkeit - ,Force-to-crush` (kurz FTC) - der Schäume verschlechtern.

Deshalb besteht bei der Bereitstellung von Polyurethanen, insbesondere Polyurethanschäumen, immer noch Bedarf an weiteren Lösungen, welche eine Reduzierung der Aldehydemission ermöglichen, aber keine Einbußen in Bezug auf die Prozessfähigkeit bzw. Verarbeitbarkeit und die mechanischen Eigenschaften mit sich bringen.

Konkrete Aufgabe der vorliegenden Erfindung war vor diesem Hintergrund die Bereitstellung von Polyurethanen, insbesondere Polyurethanschäumen, welche reduzierte Aldehydemissionen aufweisen und bei denen die Verarbeitbarkeit besser erhalten bleibt, insbesondere mit Blick auf die Werte für die Aufdrückbarkeit - ,Force-to-crush` (kurz FTC).

Überraschenderweise konnte nun gefunden werden, dass, wenn die Herstellung von Polyurethan-Systemen in Gegenwart eines Trägermaterials und von Polyamin P durchgeführt wird, diese Aufgabe gelöst wird.

Gegenstand der Erfindung ist somit ein Verfahren zur Herstellung von Polyurethanschaum durch Umsetzung mindestens einer Polyolkomponente mit mindestens einer Isocyanatkomponente in Gegenwart eines oder mehrerer Katalysatoren, die die Reaktionen Isocyanat-Polyol und/oder Isocyanat-Wasser und/oder die Isocyanat-Trimerisierung katalysieren, wobei die Umsetzung in Gegenwart eines Trägermaterials und von Polyamin P durchgeführt wird,
wobei das Polyamin P ausgewählt ist aus
(i) einem Umsetzungsprodukt aus einem Guanidinsalz und einem Polyamin,
   oder
(i) einem Umsetzungsprodukt aus einem ungesättigten Nitril und einem aliphatischen Polyamin mit mindestens zwei oder mehr Amingruppen.

Das Trägermaterial ist vorzugsweise ein pulverförmiger Feststoff. Als Trägermaterial wird insbesondere pyrogene Kieselsäure oder gefällte Kieselsäure, vorteilhafterweise im Primärpartikelgrößenbereich von insbesondere 5 bis 100 nm und spezifischen Oberflächen nach BET insbesondere von 30 bis 800 m²/g, verwendet.

Bemerkenswert ist, dass der Fachmann aufgrund des bekannten Stands der Technik dazu veranlasst wird, auf den Einsatz von Trägermaterial zu verzichten, da allgemein die Ansicht vertreten wird, dies behindere die Herstellung von PU-Schaum. Dies gilt nach dem Stand der Technik insbesondere für Polyethylenamine, die auf Silica aufgebracht sind.

Abweichend von dieser allgemeinen Auffassung kommt es bei der vorliegenden Erfindung gerade auf die Anwesenheit des Trägermaterials, wie insbesondere pyrogener Kieselsäure oder gefällter Kieselsäure an.

Der erfindungsgemäße Gegenstand ermöglicht die Bereitstellung von Polyurethanen, insbesondere Polyurethanschäumen, welche reduzierte Aldehydemissionen aufweisen und bei denen die Verarbeitbarkeit verbessert ist, besonders mit Blick auf die Werte für die Aufdrückbarkeit - Force-to-crush` (kurz FTC), verglichen mit dem Einsatz von Aldehydfängern aus dem Stand der Technik. Insbesondere kann die Aufdrückbarkeit im Vergleich zu Standardverfahren ohne Additiv so gut stabilisiert werden, dass Abweichungen von weniger als 30% resultieren. Schaumstörungen können vermieden werden.

"Polyamine P" im Sinne dieser Erfindung sind vorzugsweise Polyamine, die ein Molekulargewicht von mindestens 100 g/mol aufweisen und mindestens 2 primäre oder sekundäre Aminogruppen pro Molekül aufweisen, insbesondere ein Molekulargewicht von mindestens 200 g/mol aufweisen und mindestens 3 primäre oder sekundäre Aminogruppen pro Molekül aufweisen.

Wenn das Polyamin P eine Molmassenverteilung aufweist, dann handelt es sich bei dem Molekulargewicht im Rahmen der vorliegenden Erfindung jeweils um das zahlenmittlere Molekulargewicht. Das zahlenmittlere Molekulargewicht kann insbesondere aus GPC-Messung mit Polystyroleichung erhalten werden.

In einer bevorzugten Ausführungsform weisen die Polyamine P ein zahlenmittleres Molekulargewicht von mindestens 500 g/mol, bevorzugt von mindestens 1.000 g/mol, mehr bevorzugt von mindestens 1.500 g/mol, besonders bevorzugt von mindestens 2.000 g/mol, insbesondere von mindestens 2.500 g/mol auf. Die Obergrenze des zahlenmittleren Molekulargewichts ist im allgemeinen nicht begrenzt, bevorzugt sollte sie nicht über 1.000.000 g/mol, besonders bevorzugt nicht über 750.000 g/mol liegen.

Die Polyamine P weisen in einer bevorzugten Ausführungsform pro Molekül eine Aminofunktionalität von mindestens 4, bevorzugt von mindestens 5, mehr bevorzugt von mindestens 6 auf. Die Obergrenze der Aminofunktionalität ist im allgemeinen nicht begrenzt, bevorzugt sollte sie nicht über 10 liegen. Besonders bevorzugte Polyamine P im Sinne dieser Erfindung sind die Umsetzungsprodukte von Verbindungen der Formel H₂N-CH₂-CH₂-NH-(CH₂-CH₂-NH)ₓ-CH₂-CH₂-NH₂ (I), mit x = 0 bis 4, vorzugsweise 1 bis 3, insbesondere 1, mit Guanidinsalz. Das Umsetzungsprodukt wird im Rahmen dieser Erfindung auch als Guanidinaddukt bezeichnet und ist ein besonders bevorzugtes Polyamin P.

Geeignete Polyamine P umfassen solche Amine, die in WO 2016201615 A1 als Aldehydfänger beschrieben werden, vorzugsweise Amine mit zumindest einer 1,3-Propandiamino-function, wie insbesondere N,N'-Dimethylpropandiamine, N',N'-Diphenylpropandiamin, 1-Benzyl-1,3-propandiamin, Isotridecyloxypropyl-1,3-diaminopropan, Dodecyloxypropyl-1,3-diaminopropan, und Hexyloxypropyl-1,3-diaminopropan, wobei Isotridecyloxypropyl-1,3-diaminopropan am meisten bevorzugt ist.

Weitere bevorzugte Polyamine P im Sinne dieser Erfindung sind die Umsetzungsprodukte aus einem ungesättigten Nitril und einem aliphatischen Polyamin mit mindestens zwei oder mehr Amingruppen, vorzugsweise drei oder mehr Amingruppen, wobei als ungesättigtes Nitril insbesondere 2-Propennitril eingesetzt wird, und als aliphatisches Polyamin insbesondere Diethylentriamin, Triethylentetramin, Tetraethylenpentamin, Pentaethylenhexamin, Hexaethylenheptamin und/oder Hexamethylendiamin eingesetzt wird, wobei das Umsetzungsprodukt von 2-Propennitril mit Dietehylentriamin besonders bevorzugt ist. Der Einsatz dieser Polyamine P entspricht einer besonders bevorzugten Ausführungsform im Sinne der vorliegenden Erfindung.

Die Herstellung der Polyurethan-Systeme erfolgt erfindungsgemäß in Gegenwart eines Trägermaterials und von Polyamin P. Das bedeutet für die Zwecke dieser Erfindung, dass das Polyamin P, wie z.B. das Guanidinaddukt, zusammen mit dem Trägermaterial eingesetzt wird. Insbesondere ist das Polyamin P auf dem Trägermaterial aufgebracht.

Für die erfindungsgemäß angestrebte Wirkung im Polyurethanschaum ist es insbesondere möglich, dass
(i) das Polyamin P und das Trägermaterial getrennt voneinander zu der Reaktionsmischung, die zur Herstellung des Polyurethan-Systems dient, gegeben werden, wobei das Trägermaterial vorzugsweise in einer Flüssigkeit dispergiert ist,
(ii) das Polyamin P und das Trägermaterial vor der Zugabe zu der Reaktionsmischung, die zur Herstellung des Polyurethan-Systems dient, miteinander vermischt werden.

Dabei kann die Mischung nach (ii) vorzugsweise so gestaltet werden, dass das Trägermaterial in einer Flüssigkeit dispergiert wird und diese Dispersion mit dem Polyamin P vermischt wird (entspricht iia).

Außerdem kann die Mischung nach (ii) vorzugsweise so gestaltet werden, dass das Trägermaterial als pulverförmiger Feststoff unmittelbar mit dem Polyamin P vermischt wird (entspricht iib), so dass vorzugsweise eine Dispersion vorliegt mit Polyamin P als kontinuierlicher Phase und Trägermaterial als dispergierter Phase.

Durch das Vermischen gemäß (ii) wird außerdem ermöglicht, dass das Polyamin P auf das Trägermaterial aufzieht.

Entscheidend für die Erfindung ist jedenfalls der kombinierte Einsatz von Trägermaterial und Polyamin P, also die Anwesenheit von Trägermaterial und Polyamin P bei der Herstellung des Polyurethan-Systems.

Der erfindungsgemäße Gegenstand löst die erfindungsgemäße Aufgabe. Immer dann also, wenn ein Verfahren zur Herstellung von Polyurethan-Systemen in Gegenwart von Trägermaterial und Polyamin P durchgeführt wird, wird die Bereitstellung von Polyurethanen, insbesondere Polyurethanschäumen ermöglicht, welche reduzierte Aldehydemissionen aufweisen, und dabei eine verbesserte Prozessfähigkeit/Verarbeitbarkeit im Schaum aufweisen, im Vergleich zu Standardverfahren ohne Additiv. Insbesondere wird das Aufdrückverhalten (,FTC`) nur geringfügig negativ beeinflusst, vorzugsweise mit maximaler Abweichung von 30%. Schaumstörungen werden minimiert.

Dabei liegt die absolut auf das Polyolsystem zu verwendende Menge an Trägermaterial insbesondere zwischen 0,001 und 5 Gew.-%, die relative Menge bezogen auf das Polyamin P insbesondere zwischen 0,1 und 10 Gew.-%.

Zu den erfindungsgemäß einsetzbaren Trägersubstanzen gehören insbesondere synthetische Kieselsäuren. Diese werden generell unterschieden durch ihren Herstellungsprozess zwischen pyrogenen Kieselsäuren, die insbesondere nach dem AEROSIL-Verfahren mittels Flammen- oder Hochtemperaturhydrolyse hergestellt werden oder den gefällten Kieselsäuren, die insbesondere nach dem Nassverfahren synthetisiert werden.

Das AEROSIL-Verfahren lässt sich im Wesentlichen als kontinuierliche Flammenhydrolyse von Siliciumtetrachlorid (SiCl₄) beschreiben. Hierbei wird SiCl₄ in die Gasphase überführt und reagiert anschließend innerhalb einer Knallgasflamme mit dem intermediär gebildeten Wasserstoff spontan und quantitativ unter Bildung des gewünschten Siliziumdioxids und HCl-Gas. Durch Variation der Konzentration der Reaktionspartner (z.B. SiHCl₃, H₃SiCl oder auch AlCl₃, TiCl₄, ZrCl₄, etc. als sogenannte pyrogene Sonderoxide), der Flammentemperatur und der Verweilzeit der Kieselsäuren im Verbrennungsraum können die Teilchengröße, die Teilchengrößenverteilung, die spezifische Oberfläche und die Oberflächenbeschaffenheit der Kieselsäuren in weiten Bereichen beeinflusst werden. Zu unterscheiden ist hier, dass im Gegensatz zu Siliziumdioxid, das völlig amorph ist, die Sonderoxide TiOz, Al₂O₃ etc., in kristalliner Form anfallen. Als amorph bezeichnet man einen Stoff, bei dem die Atome keine geordneten Strukturen, sondern ein unregelmäßiges Muster bilden und lediglich über Nahordnung, nicht aber Fernordnung verfügen. Die kurzen Verweilzeiten in der Knallgasflamme schließen Sinterprozesse zwischen den kondensierten Phasen praktisch aus. Wenn das Material die Anlage noch nicht verlassen hat, ist es für eine weitere Behandlung mit einem Silan besonders reaktiv. So können die im wesentlichen hydrophilen Ausgangskieselsäuren durch eine chemische Nachbehandlung in einem kontinuierlichen Verfahren effektiv und homogen so funktionalisiert werden, dass sie anschließend hydrophobe Oberflächeneigenschaften aufweisen. Zur Funktionalisierung der Aerosil-Oberfläche wird mit Halogensilanen, Alkoxysilanen, Silazanen und Siloxanen gearbeitet. Durch diese Modifikation zeigen die nachbehandelten Kieselsäuren neue wichtige anwendungstechnische Eigenschaften.

Fällungskieselsäuren wiederum werden aus Wasserglaslösungen hergestellt, in die unter bestimmten Bedingungen Schwefelsäure eingeleitet wird. Sie entstehen also in wässriger Phase. Je nach Fällungsbedingungen kann man Produkte mit kleineren und etwas größeren Primärteilchen herstellen, die dann im Wesentlichen die Größe der spezifischen Oberfläche bestimmen. Die so erhaltenen Fällungen werden ausgewaschen und nach verschiedenen Methoden getrocknet (Drehtrocknung, Sprühtrocknung). Die zu beobachtende Teilchengröße der agglomerierten Kieselsäure liegt vorzugsweise zwischen 50 bis 150 µm. Je nachdem welches Trocknungsverfahren angewendet wird, können oder müssen die Kieselsäuren anschließend vermahlen werden. Während die Teilchengröße sich durch die Vermahlung sehr stark reduziert, wird die Größe der spezifischen Oberfläche nicht beeinflusst.

Charakterisieren lassen sich Kieselsäuren besonders über ihre spezifische Oberfläche (nach BET Brunnauer, Emmett und Teller in Anlehnung an DIN66131) und ihre Primärteilchengröße. Speziell bei den Aerosilen ist es schwierig Teilchengrößen anzugeben, da die Primärteilchen in der Regel mehr oder minder stark aggregiert und agglomeriert sind.

Insbesondere können im Rahmen dieser Erfindung als Polyamine P all jene Guanidinumsetzungsprodukte eingesetzt werden, welche durch die Umsetzung eines Guanidinsalzes mit einem Polyamin erhältlich sind, wobei grundsätzlich auch Polyamine mit einer großen Molmasse eingesetzt werden können, z.B. mit einer Molmasse > 500 g/mol oder >1000 g/mol oder >2000 g/mol usw.

Der Erfindungsgegenstand ermöglicht es, dass sogar bei Lagerung über einen längeren Zeitraum die Emission von Aldehyd zuverlässig minimiert werden kann. Dabei kann der starke Anstieg der Acetaldehydemission bei Lagerung, der z.B. bei PEI-Einsatz beobachtet wird, so begrenzt werden, dass es zu kaum einer oder gar keiner negativen Beeinflussung der Acetaldehydemission kommt, zumindest aber nicht zu einer so drastischen Erhöhung des Gehalts an Acetaldehyd im Polyurethanschaum um z.B. das 50-fache, wie dies beim Einsatz der PEI der Fall ist. Es wird also zumindest eine deutliche Reduktion des Anstiegs der Acetaldehydemission bei Lagerung erzielt. Insbesondere kann selbst nach einer Lagerung von 5 Monaten die Erhöhung des Gehalts an Acetaldehyd im Polyurethanschaum vorteilhafterweise auf maximal das 2,5-fache begrenzt werden verglichen mit einem Schaum, dem keine Additive zur Verminderung der Formaldehyd Emissionen zugegeben wurden. Dies ist eine ganz erhebliche Verbesserung gegenüber jenen Vorschlägen aus dem Stand der Technik, welche einen PEI-Einsatz beinhalten.

Insbesondere kann durch die vorliegende Erfindung die Emission von Formaldehyd aus dem fertigen Polyurethanschaum auch nach einer Lagerung von 5 Monaten auf einen Wert von vorteilhafterweise maximal 0,02 mg Formaldehyd/kg PU-Schaum, vorzugsweise bestimmbar gemäß VDA 275 (gemäß der modifizierten Vorgehensweise im Beispielteil), sicher begrenzt werden.

Das erfindungsgemäße Verfahren ermöglicht somit die Bereitstellung von Polyurethanschaum, welche nicht nur mit Blick auf die Aldehydemissionen, sondern auch mit Blick auf die Verarbeitbarkeit gute Resultate liefern. Durch Zugabe der erfindungsgemäßen Kombination von Trägermaterial und Polyamin P lassen sich Polyurethanschäume mit verminderten Aldehydemissionen herstellen, bei denen die Acetaldehydemissionen kaum oder gar nicht negativ beeinflusst werden und bei denen vorzugsweise auch ungewöhnlichere Aldehyde wie z. B. Benzaldehyd oder Acrolein absorbiert werden können.

Ein weiterer Vorteil der Erfindung liegt darin, dass die resultierenden Polyurethansysteme eine biozide oder verbesserte biozide Wirkung als gewöhnliche Polyurethansysteme haben. Ein zusätzlicher Vorteil der Erfindung liegt darin, dass das erfindungsgemäße Verfahren eine beschleunigte Umsetzung der Reaktanten erlaubt verglichen mit Verfahren, bei denen die Kombination von Trägermaterial und Polyamin P nicht zum Einsatz kommt.

Die erfindungsgemäß eingesetzten Verbindungen, deren Herstellung, die Verwendung der Verbindungen zur Herstellung der Polyurethanschäume sowie die Polyurethanschäume selbst werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden nachfolgend Angaben in Prozent gemacht, so handelt es sich, wenn nicht anders angegeben um Angaben in Gewichts-%. Werden nachfolgend Mittelwerte angegeben, so handelt es sich, wenn nicht anders angegeben um das Zahlenmittel. Werden nachfolgend Stoffeigenschaften, wie z. B. Viskositäten oder ähnliches angegeben, so handelt es sich, wenn nicht anders angegeben, um die Stoffeigenschaften bei 25 °C. Werden in der vorliegenden Erfindung chemische (Summen-) Formeln verwendet, so können die angegebenen Indizes sowohl absolute Zahlen als auch Mittelwerte darstellen. Bei polymeren Verbindungen stellen die Indizes vorzugsweise Mittelwerte dar.

Im Rahmen der Erfindung werden Trägermaterial und Polyamin P eingesetzt. Bevorzugte Polyamine P sind Umsetzungsprodukte von Guanidinsalzen mit einem Polyamin. Die Umsetzung der Guanidinsalze mit dem Polyamin und insbesondere mit den Verbindungen der Formel (I) kann wie im Stand der Technik beschrieben erfolgen. So sind Guanidinumsetzungsprodukte dem Fachmann wohl bekannt. GB657753 beschreibt zwei mögliche Synthesewege, die zu Guanidinumsetzungsprodukten bzw. Derivaten der Guanidinsalze führen. Zum einen erhält man Guanidinumsetzungsprodukte durch Umsetzung einer aminischen Verbindung, wie z.B. Diethylentriamin, mit einem Guanidinsalz, wie z.B. Guanidincarbonat, wobei das Produkt in Salzform anfällt. Eine andere Möglichkeit zu dieser Verbindungsklasse zu gelangen, stellt die Reaktion von Aminen mit Cyanamid oder Dicyandiamid dar, deren Produkte anschließend durch Behandlung mit einer organischen oder anorganischen Säure in die entsprechende Salze überführt werden. Auch die dabei resultierenden Produkte sind Guanidinumsetzungsprodukte im Sinne dieser Erfindung. Wie in EP2300418 beschrieben wird, kann die Umsetzung auch direkt in Gegenwart einer Säure durchgeführt werden, sodass man als Produkt das entsprechende Salz der Alkyl-Guanidinverbindung erhält. Alternativ können Salze der Amine durch eine Reaktion mit Dicyanamid oder Natriumdicyanimid zu Biguanidinen umgesetzt werden. Eine Auflistung weiterer geeigneter synthetischer Methoden findet sich in Ullmann's Encyclopedia of Industrial Chemistry "Guanidine and Derivatives" und im Review von Katritzky et al. (Journal of Organic Chemistry, 2010, p. 76).

Die erfindungsgemäß vorzugsweise einsetzbaren Guanidinumsetzungsprodukte kann man vorteilhafterweise durch Umsetzung eines Guanidinsalzes, insbesondere eines Guanidin-Säureadditionssalzes, mit einem Polyamin bei Temperaturen vorzugsweise zwischen 90-150 °C, einer Reaktionsdauer von vorzugsweise fünf bis 36 Stunden erhalten, wobei das gebildete Ammoniak gegebenenfalls mittels einer Vakuumpumpe aus dem Reaktionsgemisch entfernt werden kann. Da mit dem fortschreitenden Umsatz der Reaktion die Viskosität des Reaktionsgemisches stark ansteigen kann, kann es von Vorteil sein, ein geeignetes Lösungsmittel einzusetzen. Ferner ist es möglich, nach Beenden der Reaktion, dem Produkt Wasser zuzugeben. Je nach Viskosität des Produktes kann die Zugabe bei Raumtemperatur oder bei höheren Temperaturen erfolgen.

Bei der Umsetzung des Guanidinsalzes mit dem Polyamin, insbesondere einer Verbindung der Formel (I), beträgt das molare Verhältnis von Guanidinsalzen zu Polyamin, insbesondere Verbindungen der Formel (I), 5 zu 1 bis 1 zu 5, vorzugsweise 1 zu1 bis 1 zu 3, insbesondere 2 zu 3 bis 1 zu 3. Ein besonders bevorzugtes molares Verhältnis von Guanidinsalzen zu Polyamin ist 1 zu 3 oder 1 zu 2 oder 2 zu 3.

In Abhängigkeit von dem System, in das die Guanidinumsetzungsprodukte später eingearbeitet werden, kann es von Vorteil sein, sie in einem optionalen Folgeschritt zumindest teilweise mit Funktionalisierungsreagenzien umzusetzen, um solche Eigenschaften wie Viskosität, Löslichkeit, Polarität und Mischbarkeit möglichst systemadäquat einzustellen. Als Funktionalisierungsreagenzien können insbesondere alle polymeren und monomeren Stoffe eingesetzt werden, deren funktionelle Gruppen eine Reaktion mit Amingruppen eingehen können wie z.B. Epoxide, Säuren, Alkylhalogenide, Dialkylsulfate usw. Solches Vorgehen ist dem Fachmann an sich bekannt und er kann gewünschtenfalls mit Hilfe weniger Handversuche routinemäßig eine optionale Funktionalisierung einstellen. Der Begriff der Guanidinumsetzungsprodukte umfasst somit also auch die funktionalisierten Guanidinumsetzungsprodukte.

Außerdem können die erfindungsgemäß einsetzbaren Guanidinumsetzungsprodukte durch Zugabe einer Base, wie beispielsweise Natriummethanolat, in das entsprechende basische Guanidinderivat überführt werden, das aufgrund seiner starken Basizität bei der Herstellung des PU-Systems als Katalysator fungieren kann. Auch hierbei handelt es sich um erfindungsgemäß einsetzbare Guanidinumsetzungsprodukte.

Grundsätzlich können alle bekannten Guanidinsalze im Sinne dieser Erfindung umgesetzt werden, wie vorzugsweise Guanidinhydrochlorid, -sulfamat, -phosphat, -acetat, -carbonat, -sulfat, -thiocyanat oder - nitrat. Insbesondere können Guanidinhydrochlorid und/oder Guanidincarbonat als Guanidinsalz eingesetzt werden. Auch die Produkte, die sich in ähnlicher Weise aus der Umsetzung der Biguanidine mit einem Polyamin ergeben, sind Guanidinumsetzungsprodukte im Sinne dieser Erfindung.

Außerdem, wie dem Fachmann z.B. aus WO2008080184 bekannt ist, besteht die Möglichkeit das ursprüngliche Gegenion des derivatisierten Guanidinsalzes (also des Guanidinumsetzungsproduktes) mittels eines Ionenaustauschers durch ein anderes zu ersetzen.

Besonders bevorzugte, im Sinne der Erfindung einsetzbare Guanidinumsetzungsprodukte sind die Verbindungen der Formel (II)

H[-(HN-CH₂-CH₂)ₐ-NH-C(=NHR⁺X⁻)]_{c}-NH-(CH₂-CH₂-NH-)_{b}H (II)

die durch Umsetzung eines Guanidinsalzes mit einer Verbindung der Formel (I) erhältlich sind, mit a = unabhängig voneinander 0 bis 6, vorteilhafterweise 2 bis 6, vorzugsweise 3 bis 5, insbesondere 3 oder 4,
b = unabhängig voneinander 0 bis 6, vorteilhafterweise 2 bis 6, vorzugsweise 3 bis 5, insbesondere 3 oder 4,
c = unabhängig voneinander 1 bis 4, vorzugsweise 1 oder 2, bevorzugt 1,
R = unabhängig voneinander H oder (CH₂-CH₂-NH-)_{d}H, insbesondere H,
d = unabhängig voneinander 0 bis 6, vorteilhafterweise 2 bis 6, vorzugsweise 3 bis 5, insbesondere 3 oder 4,
a und b können gleich 0 sein, wenn d > 0 und R ungleich H, oder d und b können gleich 0 sein, wenn a > 0, oder d und a können gleich 0 sein, wenn b > 0 ist,
X- = Anion, bevorzugt ein Halogenid, besonders Chlorid.

Als Anion kann auch CO₃²⁻ fungieren.

Bevorzugte Verbindungen der Formel (II) sind solche, bei denen a = b ist, mit a = b = 2 bis 6, vorzugsweise 3 bis 5, bevorzugt 3 oder 4, besonders bevorzugt 3 und bei denen vorzugsweise X- = Chlorid ist und bei denen vorzugsweise R = H ist und bei denen vorzugsweise c = 1 oder 2 ist. Diese Verbindungen sind insbesondere durch die Umsetzung eines Guanidinsalzes mit einem Polyamin der Formel (I) erhältlich.

Vorzugsweise erfolgt somit die Umsetzung in dem erfindungsgemäßen Verfahren in Gegenwart einer Verbindung der Formel (II)

H[-(HN-CH₂-CH₂)ₐ-NH-C(=NHR⁺X⁻)]_{c}-NH-(CH₂-CH₂-NH-)_{b}H (II)

die durch Umsetzung eines Guanidinsalzes mit einer Verbindung der Formel (I) erhältlich sind, mit a = unabhängig voneinander 0 bis 6, vorteilhafterweise 2 bis 6, vorzugsweise 3 bis 5, insbesondere 3 oder 4,
b = unabhängig voneinander 0 bis 6, vorteilhafterweise 2 bis 6, vorzugsweise 3 bis 5, insbesondere 3 oder 4,
c = unabhängig voneinander 1 bis 4, vorzugsweise 1 oder 2, bevorzugt 1,
R = unabhängig voneinander H oder (CH₂-CH₂-NH-)_{d}H, insbesondere H,
d = unabhängig voneinander 0 bis 6, vorteilhafterweise 2 bis 6, vorzugsweise 3 bis 5, insbesondere 3 oder 4,
a und b können gleich 0 sein, wenn d > 0 und R ungleich H, oder d und b können gleich 0 sein, wenn a > 0, oder d und a können gleich 0 sein, wenn b > 0 ist,
X⁻ = Anion, bevorzugt ein Halogenid, besonders Chlorid.

Bevorzugte Verbindungen der Formel (II) sind solche, bei denen a = b ist, mit a = b = 2 bis 6, vorzugsweise 3 bis 5, bevorzugt 3 oder 4, besonders bevorzugt 3 und bei denen vorzugsweise X- = Chlorid ist und bei denen vorzugsweise R = H ist und bei denen vorzugsweise c = 1 oder 2 ist.

Die nachfolgende Formel (III) gibt beispielhaft eine Verbindung der Formel (II) wieder, bei der X⁻ = Cl⁻, a = b = 3, und c = 2 und R = H ist:

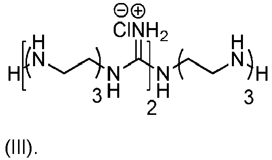

Es entspricht einer besonders bevorzugten Ausführungsform der Erfindung, wenn in dem erfindungsgemäßen Verfahren der Anteil der Verbindungen der Formel (II), darin vorzugsweise mit a = b = 2 bis 6, insbesondere 3 oder 4, mindestens >40 Gew.-% an den durch Umsetzung eines Guanidinsalzes mit einer Verbindung der Formel (I) erhältlichen Verbindungen ausmacht. Vorzugsweise beträgt dabei der Anteil der Verbindungen der Formel (II), darin vorzugsweise mit a = b = 2 bis 6, insbesondere 3 oder 4, von 60 bis 80 Gew.-%, insbesondere von 90 bis 98 Gew.-% bezogen auf die durch Umsetzung eines Guanidinsalzes mit einer Verbindung der Formel (I) erhältlichen Verbindungen.

In einer bevorzugten Ausführungsform der Erfindung wird neben dem Guanidinumsetzungsprodukt zusätzlich noch zumindest ein aliphatisches Polyamin zugesetzt, vorzugsweise mit einer Molmasse kleiner 400, vorteilhafterweise kleiner 300 und insbesondere kleiner 250 g/mol, umfassend vorteilhafterweise zumindest zwei oder mehr Amingruppen, z.B. Diethylentriamin, Triethylentetramin, Tetraethylenpentamin, Pentaethylenhexamin, Hexaethylenheptamin, Hexamethylendiamin, 1,8-Diaminotriethylenglykol, Tris(2-aminoethyl)amin. Das zusätzlich optional zusetzbare aliphatische Polyamin kann beispielsweise in einer Menge von 0,001 bis 10 Gew.-%, vorzugsweise 0,01 bis 5 Gew.-%, insbesondere 0,05 bis 3 Gew.-% bezogen auf die Polyolkomponente eingesetzt werden. Dies ist als eine zusätzliche Menge zu verstehen, die nicht auf das Polyamin P anzurechnen ist.

Die Guanidinumsetzungsprodukte, die erfindungsgemäß ein bevorzugtes Polyamin P sein können, können im Sinne dieser Erfindung auch "in situ" gebildet werden, d.h. die Guanidinumsetzungsprodukte entstehen erst im Verlauf der Reaktion der Polyolkomponente mit mindestens einer Isocyanatkomponente im Rahmen der Herstellung des Polyurethansystems aus den geeigneten Edukten, welche insbesondere Guanidinsalz und Polyamin umfassen. Mit anderen Worten ist also beim erfindungsgemäßen Verfahren auch die Möglichkeit umfasst, dass das Guanidinumsetzungsprodukt, das erfindungsgemäß ein bevorzugtes Polyamin P ist, erst in der Reaktionsmischung zur Herstellung des Polyurethansystems gebildet wird. Dies entspricht einer bevorzugten Ausführungsform der Erfindung. Es ist aber mehr bevorzugt, dass bereits fertige Guanidinumsetzungsprodukt bei der Herstellung des Polyurethansystems einzusetzen.

Die Herstellung der Polyurethansysteme kann ansonsten auf die übliche Weise und wie im Stand der Technik beschrieben erfolgen. Sie ist dem Fachmann wohlbekannt Eine grundsätzliche Übersicht findet sich z. B. in G. Oertel, Polyurethane Handbook, 2nd edition, Hanser/Gardner Publications Inc., Cincinnati, Ohio, 1994, p. 177-247. Bei der erfindungsgemäßen Herstellung der Polyurethansysteme werden die Polyamine P, bevorzugt Guanidinumsetzungsprodukte, vorzugsweise in einem Massenanteil von 0,01 bis 20 Teilen, bevorzugt 0,05 bis 5 Teilen und besonders bevorzugt von 0,1 bis 3 Teilen bezogen auf 100 Teile Polyolkomponente eingesetzt.

Bei der Durchführung des erfindungsgemäßen Verfahrens zur Herstellung der Polyurethansysteme kann es vorteilhaft sein, wenn außerdem Wasser, physikalische Treibmittel, Flammschutzmittel und/oder weitere Additive zugegeben werden.

Als Isocyanatkomponente können in dem erfindungsgemäßen Verfahren alle Isocyanate, insbesondere die an sich bekannten aliphatischen, cycloaliphatischen, araliphatischen und vorzugsweise aromatischen mehrwertigen Isocyanate eingesetzt werden. Geeignete Isocyanate im Sinne dieser Erfindung sind vorzugsweise alle mehrfunktionalen organischen Isocyanate, wie beispielsweise 4,4'-Diphenylmethandiisocyanat (MDI), Toluoldiisocyanat (TDI), Hexamethylendiisocyanat (HMDI) und Isophorondiisocyanat (IPDI). Besonders geeignet ist das als "polymeres MDI" ("crude MDI") bekannte Gemisch aus MDI und höher kondensierten Analogen mit einer mittleren Funktionalität von 2 bis 4, sowie die verschiedenen Isomere des TDI in reiner Form oder als Isomerengemisch. Besonders bevorzugte Isocyanate sind Mischungen von TDI und MDI.

Als Polyolkomponente geeignete Polyole im Sinne dieser Erfindung sind vorzugsweise alle organischen Substanzen mit mehreren gegenüber Isocyanaten reaktiven Gruppen, sowie deren Zubereitungen einsetzbar. Bevorzugte Polyole sind alle zur Herstellung von Polyurethansystemen, insbesondere Polyurethanschaumstoffen üblicherweise verwendeten Polyetherpolyole und Polyesterpolyole. Die Polyole sind vorzugsweise keine Verbindungen, die mindestens einen 5- oder 6-gliedrigen Ring aufweisen, der aus ein oder zwei Sauerstoffatomen und Kohlenstoffatomen aufgebaut ist.

Polyetherpolyole können z. B. durch Umsetzung von mehrwertigen Alkoholen oder Aminen mit Alkylenoxiden gewonnen werden. Polyesterpolyole basieren vorzugsweise auf Estern mehrwertiger Carbonsäuren (die entweder aliphatisch, beispielsweise Adipinsäure, oder aromatisch, beispielsweise Phthalsäure oder Terephthalsäure sein können) mit mehrwertigen Alkoholen (meist Glycolen). Zudem können auf natürlichen Ölen basierende Polyether (natural oil based polyols, NOPs) eingesetzt werden. Diese Polyole werden aus natürlichen Ölen wie z.B. Soja- oder Palmöl gewonnen und können unmodifiziert oder modifiziert verwendet werden.

Eine weitere Klasse von Polyolen sind solche, die als Prepolymere durch Umsetzung von Polyol mit Isocyanat in einem Molverhältnis von 100 zu 1 bis 5 zu 1, bevorzugt 50 zu 1 bis 10 zu 1 erhalten werden.

Noch eine weitere Klasse von vorzugsweise einsetzbaren Polyolen stellen die sogenannten Füllstoffpolyole (Polymerpolyole) dar. Diese zeichnen sich dadurch aus, dass sie feste organische Füllstoffe bis zu einem Feststoffgehalt von 40 Gew.-% oder mehr in disperser Verteilung enthalten. Man kann z.B. unter anderem verwenden:
SAN-Polyole: Dies sind hochreaktive Polyole, welche ein Copolymer auf der Basis Styrol/Acrylnitril (SAN) dispergiert enthalten.

PHD-Polyole: Dies sind hochreaktive Polyole, welche Polyharnstoff ebenfalls in dispergierter Form enthalten.

PIPA-Polyole: Dies sind hochreaktive Polyole, welche ein Polyurethan, beispielsweise durch in situ-Reaktion eines Isocyanats mit einem Alkanolamin in einem konventionellen Polyol gebildet, in dispergierter Form enthalten.

Der Festkörperanteil, der je nach Anwendung bevorzugt zwischen 5 und >40 Gew.-%, bezogen auf das Polyol liegen kann, ist für eine verbesserte Zellöffnung verantwortlich, so dass das Polyol insbesondere mit TDI kontrolliert verschäumbar wird und kein Schrumpfen der Schäume auftritt. Der Festkörper wirkt damit als wesentliche Prozesshilfe. Eine weitere Funktion besteht darin, über den Feststoffanteil die Härte zu kontrollieren, denn höhere Festkörperanteile bewirken eine höhere Härte des Schaums.

Die Formulierungen mit feststoffhaltigen Polyolen sind deutlich weniger eigenstabil und bedürfen daher neben der chemischen Stabilisierung durch die Vernetzungsreaktion eher auch zusätzlich einer physikalischen Stabilisierung.

Je nach Feststoffgehalt der Polyole können diese z.B. alleine oder z.B. in Abmischung mit den oben genannten ungefüllten Polyolen eingesetzt werden.

Ein im Rahmen dieser Erfindung bevorzugtes Verhältnis von Isocyanatkomponente zu Polyolkomponnete, ausgedrückt als Index, liegt im Bereich von 10 bis 1000, bevorzugt 40 bis 350. Dieser Index beschreibt das Verhältnis von tatsächlich eingesetztem Isocyanat zu (für eine stöchiometrische Umsetzung mit Polyol) berechnetem Isocyanat. Ein Index von 100 steht für ein molares Verhältnis der reaktiven Gruppen von 1 zu 1.

Geeignete Katalysatoren, die in dem erfindungsgemäßen Verfahren verwendet werden können, sind vorzugsweise Substanzen, die die Gelreaktion (Isocyanat-Polyol), die Treibreaktion (Isocyanat-Wasser) oder die Di- bzw. Trimerisierung des Isocyanats katalysieren. Typische Beispiele sind Amine, wie z.B. Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N-Ethylmorpholin, Tris(dimethylaminopropyl)hexahydro-1,3,5-triazin, Dimethylaminoethanol, Dimethylaminoethoxyethanol und Bis(dimethylaminoethyl)ether, Zinnsalze organsicher Carbonsäuren, Zinnverbindungen wie Dibutylzinndilaurat und Kaliumsalze wie Kaliumacetat. Vorzugsweise werden als weitere Katalysatoren solche eingesetzt, die keine organische Zinnverbindungen, insbesondere kein Dibutylzinndilaurat enthalten.

Geeignete Einsatzmengen dieser Katalysatoren im erfindungsgemäßen Verfahren richten sich nach dem Typ des Katalysators und liegen üblicherweise im Bereich von 0,01 bis 5 pphp (= Gewichtsteilen bezogen auf 100 Gewichtsteile Polyol) bzw. 0,1 bis 10 pphp für Kaliumsalze.

Geeignete Wasser-Gehalte im erfindungsgemäßen Verfahren hängen davon ab, ob zusätzlich zum Wasser noch physikalische Treibmittel eingesetzt werden oder nicht. Bei rein Wasser-getriebenen Schäumen liegen die Werte typischerweise bei vorzugsweise 1 bis 20 pphp, werden zusätzlich andere Treibmittel eingesetzt, verringert sich die Einsatzmenge auf üblicherweise z.B. 0 oder z.B. 0,1 bis 5 pphp. Zur Erlangung hoher Schaumraumgewichte werden vorzugsweise weder Wasser noch andere Treibmittel eingesetzt.

Geeignete physikalische Treibmittel im Sinne dieser Erfindung sind Gase, beispielsweise verflüssigtes CO₂, und leichtflüchtige Flüssigkeiten, beispielsweise Kohlenwasserstoffe mit 4 oder 5 Kohlenstoff-Atomen, bevorzugt cyclo-, iso- und n-Pentan, Fluorkohlenwasserstoffe, bevorzugt HFC 245fa, HFC 134a und HFC 365mfc, aber auch olefinische Fluorkohlenwasserstoffe wie HHO 1233zd oder HHO1336mzzZ, Fluorchlorkohlenwasserstoffe, bevorzugt HCFC 141b, Sauerstoff-haltige Verbindungen wie Methylformiat und Dimethoxymethan, oder Chlorkohlenwasserstoffe, bevorzugt Dichlormethan und 1,2-Dichlorethan. Des Weiteren eignen sich Ketone (z.B. Aceton) oder Aldehyde (z.B. Methylal) als Treibmittel.

Als Stabilisatoren können die im Stand der Technik genannten Substanzen verwendet werden. Vorteilhafterweise können die erfindungsgemäßen Zusammensetzungen ein oder mehrere Stabilisatoren enthalten. Dabei handelt es sich insbesondere um Kohlenstoffatome aufweisende Siliziumverbindungen, vorzugsweise ausgewählt aus den Polysiloxanen, Polydimethylsiloxanen, organomodifizierten Polysiloxanen, polyethermodifizierten Polysiloxanen und Polyether-Polysiloxan-Copolymeren.

Als ein oder mehrere Kohlenstoffatome aufweisende Siliziumverbindungen können die im Stand der Technik genannten Substanzen verwendet werden. Vorzugsweise werden solche Si-Verbindungen eingesetzt, die für den jeweiligen Schaumtypen besonders geeignet sind. Geeignete Siloxane sind beispielsweise in den folgenden Schriften beschrieben: EP 0839852, EP 1544235, DE 102004001408, WO 2005/118668, US 2007/0072951, DE 2533074, EP 1537159 EP 533202, US 3933695, EP 0780414, DE 4239054, DE 4229402, EP 867465. Die Herstellung der Si-Verbindungen kann wie im Stand der Technik beschrieben erfolgen. Geeignete Beispiele sind z. B. in US 4147847, EP 0493836 und US 4855379 beschrieben.

Insbesondere können organisch modifizierte Si-Verbindungen eingesetzt werden. Besonders bevorzugte, einsetzbare organisch modifizierte Si-Verbindungen sind z.B. solche gemäß nachfolgender Formel (IV)

MₖDₘD'ₙTₒQₚ (IV)

mit
M = [R²R¹₂SiO_{1/2}]
D = [R¹R¹SiO_{2/2}]
D' = [R³R¹SiO_{2/2}]
T = [R¹SiO_{3/2}]
Q = [SiO_{4/2}]
k = 0 bis 22, bevorzugt 2 bis 10, besonders bevorzugt 2
m = 0 bis 400, bevorzugt 0 bis 200, besonders bevorzugt 2 bis 100
n = 0 bis 50, bevorzugt 0,5 bis 20, besonders bevorzugt 0,7 bis 9
o = 0 bis 10, bevorzugt 0 bis 5, insbesondere bevorzugt 0
p = 0 bis 10 bevorzugt 0 bis 5, insbesondere bevorzugt 0
R² = R¹ oder R³
R¹ = unabhängig voneinander Alkyl- oder Arylreste oder H, vorzugsweise Methyl, Ethyl, Propyl oder Phenyl, bevorzugt Methyl oder Phenyl
R³ = organische Modifikationen z.B. Polyether oder ein einwertiger Rest mit 1 bis 30 C-Atomen mit wenigstens einem Heteroatom ausgewählt aus der Gruppe N, S, O, P, F, Cl, Br

Bevorzugt sind R³ in Formel (IV) Reste aus der Gruppe,

-CH₂CH₂CH₂O[CH₂CH₂O]ₐ[CH₂CH(CH₃)O]_{b}[CHR⁴CHR⁴O]_{c}R⁵

-CH₂CH₂CH₂CN

-CH₂CH₂CF₃

-CH₂CH₂CH₂Cl

mit
R⁵ = Alkyl, Aryl, Urethan, Carboxyl, Silyl oder H, bevorzugt H, -Me, oder -C(O)Me
R⁴ = Alkyl, Aryl, die ggf. durch Sauerstoff unterbrochen sein können, insbesondere bevorzugt H, Me, Et oder Ph,
a = 0 bis 100, bevorzugt 0,5 bis 70, besonders bevorzugt 1 - 40
b = 0 bis 100, bevorzugt 0,5 bis 70, besonders bevorzugt 0 - 40
c = 0 bis 50, bevorzugt 0 bis 15, insbesondere bevorzugt 0
a + b + c > 3.

Insbesondere können unmodifizierte Si-Verbindungen eingesetzt werden.

Besonders bevorzugte, einsetzbare unmodifizierte Si-Verbindungen sind z.B. solche der nachfolgenden Formel (V)

M_{q} Dᵣ (V)

mit
M, D wie bei voriger Formel (IV) definiert, und
q = 2
r = 0 bis 50, bevorzugt 1 bis 40, besonders bevorzugt 2 bis 30.

Besonders bevorzugt können die oben genannten Si-Verbindungen, insbesondere der Formel (IV) und/oder (V) einzeln oder in Kombination miteinander eingesetzt werden. In Fall von Mischungen kann zusätzlich ein Kompatibilisator eingesetzt werden. Dieser kann ausgewählt sein aus der Gruppe aliphatischer oder aromatischer Kohlenwasserstoffe, besonders bevorzugt aliphatische Polyether oder Polyester.

Es kann vorteilhaft sein, wenn in den Siloxanverbindungen der Formel (IV) mindestens 10 Äquivalenz-% (und höchstens 50 Äquivalenz-%) der Reste R² Alkyl-Gruppen mit 8 bis 22 Kohlenstoffatomen sind (bezogen auf die Gesamtzahl der Reste R2 in der Siloxanverbindung).

Vorzugsweise können von 0,05 bis 10 Massenteile Siliziumverbindungen pro 100 Massenteile Polyolkomponenten eingesetzt werden.

Insbesondere der Einsatz der vorgenannten Siliziumverbindungen in Kombination mit den erfindungsgemäß einzusetzenden Umsetzungsprodukten ermöglicht sehr gute Resultate im Hinblick auf die erfindungsgemäß angestrebten Polyurethane.

Neben oder an Stelle von Wasser und ggf. physikalischen Treibmitteln, können auch andere chemische Treibmittel, die mit Isocyanaten unter Gasentwicklung reagieren, wie beispielsweise Ameisensäure, Carbamate oder Carbonate in der erfindungsgemäßen Additivzusammensetzung vorhanden sein.

Geeignete optionale Flammschutzmittel im Sinne der vorliegenden Erfindung sind bevorzugt flüssige organische Phosphorverbindungen, wie halogenfreie organische Phosphate, z.B. Triethylphosphat (TEP), halogenierte Phosphate, z.B. Tris(1-chlor-2-propyl)phosphat (TCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor. Des Weiteren sind als Flammschutzmittel halogenierte Verbindungen, beispielsweise halogenierte Polyole, sowie Feststoffe wie Blähgraphit und Melamin geeignet.

Durch das erfindungsgemäße Verfahren können Polyurethanschäume hergestellt werden, die besonders arm an Aldehydemissionen sind bei guter Verarbeitbarkeit.

Die Bezeichnung Polyurethan ist im Sinne der Erfindung insbesondere als Oberbegriff für ein aus Di- bzw. Polyisocyanaten und Polyolen oder anderen gegenüber Isocyanat reaktive Spezies, wie z.B. Aminen, hergestelltes Polymer zu verstehen, wobei die Urethan-Bindung nicht ausschließlicher oder überwiegender Bindungstyp sein muss. Auch Polyisocyanurate und Polyharnstoffe sind ausdrücklich mit eingeschlossen. Die erfindungsgemäße Herstellung von Polyurethanschaumstoffen bzw. die Herstellung der Polyurethanschaumstoffe kann nach allen dem Fachmann geläufigen Verfahren erfolgen, beispielsweise im Handmischverfahren oder bevorzugt mit Hilfe von Hochdruck- oder Niederdruck-Verschäumungsmaschinen. Das erfindungsgemäße Verfahren kann kontinuierlich oder diskontinuierlich durchgeführt werden. Eine diskontinuierliche Durchführung des Verfahrens ist bevorzugt bei der Herstellung von Formschäumen, Kühlschränken, Schuhsohlen oder Paneelen. Eine kontinuierliche Verfahrensführung ist bei der Herstellung von Dämmplatten, Metallverbundelementen, Blöcken oder bei Sprühverfahren bevorzugt.

In dem erfindungsgemäßen Verfahren können die erfindungsgemäß verwendeten Kombinationen aus Polyamin P, insbesondere Guanidinaddukt, und Trägermaterial vorzugsweise direkt vor oder aber auch erst während der Reaktion (zur Ausbildung der Urethanbindungen) zugemischt werden. Bevorzugt erfolgt die Zusammenführung/Zudosierung der Kombination in einem Mischkopf, sowie auch in einem Batchverfahren für fertige Polyolsysteme. Das Polyamin P, insbesondere Guanidinaddukt, kann je nach bevorzugter Ausführungsform direkt mit der Kieselsäure dispergiert werden oder das Polyamin P, insbesondere Guanidinaddukt, und die vorzugsweise in einem Lösemittel dispergierte Kieselsäure können separat voneinander der Polyolkomponente zugesetzt werden.

Die erfindungsgemäßen Polyurethansysteme können vorzugsweise 0,001 bis 10 Gew.-%, vorteilhafterweise 0,01 bis 5 Gew.-%, insbesondere 0,1 bis 3 Gew.-% bezogen auf die Gesamtzusammensetzung des Polyurethansystems, einer Gesamtmenge an Trägermaterial und Polyamin P aufweisen.

Die erfindungsgemäßen Polyurethansysteme sind Polyurethanschaum, insbesondere z. B. ein Polyurethanhartschaum, ein Polyurethanweichschaum, ein viskoelastischer Schaum, ein HR-Schaum, ein halbharter Polyurethanschaum, ein thermoverformbarer Polyurethanschaum oder ein Integralschaum, bevorzugt ein Polyurethan HR-Schaum.

Die erfindungsgemäßen Polyurethanschäume, können z. B. als Kühlschrankisolierung, Dämmplatte, Sandwichelement, Rohrisolation, Sprühschaum, 1- & 1,5-Komponenten-Dosenschaum (ein 1,5-Komponenten-Dosenschaum ist ein Schaum der durch zerstören eines Behälters in der Dose erzeugt wird), Holzimitat, Modellschaum, Verpackungsschaum, Matratze, Möbelpolster, Automobil-Sitzpolster, Kopfstütze, Instrumententafel, Automobil-Innenverkleidung, Automobil-Dachhimmel, Schallabsorptionsmaterial, Lenkrad, Schuhsole, Teppichrückseitenschaum, Filterschaum, Dichtschaum, Dichtmittel und Kleber, Bindemittel oder Lackierung zur Herstellung entsprechender Produkte verwendet werden.

Die Zusammensetzung zur Herstellung von Polyurethanschaum umfasst wenigstens einen Urethan- und/oder Isocyanurat-Katalysator, wenigstens ein Treibmittel, wenigstens eine Isocyanatkomponente und wenigstens eine Polyolkomponente, wobei als Additiv Trägermaterial und Polyamin P enthalten sind, vorzugsweise eine oder mehrere geträgerte Verbindungen, umfassend Polyamin P, vorzugsweise erhalten durch Umsetzung eines Guanidinsalzes mit einem Polyamin, insbesondere einer Verbindungen der Formel (I) H₂N-CH₂-CH₂-NH-(CH₂-CH₂-NH)ₓ-CH₂-CH₂-NH₂,
mit x = 0 bis 4, vorzugsweise 1 bis 3, insbesondere 1, erhältlich sind. Insbesondere wird auf das bereits gesagte verwiesen, um Wiederholungen zu vermeiden.

Der Begriff der Zusammensetzung in diesem Sinne umfasst auch Mehrkomponentenzusammensetzungen, bei denen zwei oder mehr Komponenten zu mischen sind, um eine chemische Reaktion zu erzeugen, welche zur Herstellung von Polyurethanschaum führt. Der Begriff der Zusammensetzung in diesem Sinne umfasst insbesondere das Gemisch (Mischung) wenigstens eines Urethan- und/oder Isocyanurat-Katalysators, wenigstens eines Treibmittels, wenigstens einer Isocyanatkomponente und wenigstens einer Polyolkomponente sowie Trägermaterial und Polyamin P, insbesondere ein Guanidinumsetzungsprodukt.

Eine bevorzugte erfindungsgemäße Zusammensetzung zur Herstellung von Polyurethanschaum kann Polyol z.B. in Mengen von 25 bis 75 Gew.-%, Wasser z.B. in Mengen von 1 bis 7 Gew.-%, Katalysator z.B. in Mengen von 0,05 bis 3 Gew.-%, physikalisches Treibmittel z.B. in Mengen von 0 bis 25 Gew.-% (z.B. 0,1 bis 25 Gew.-%), Stabilisatoren (wie z. B. Si-haltige und nicht Si-haltige, insbesondere Si-haltige und nicht Si-haltige organische Stabilisatoren und Tenside) z. B. in Mengen von 0,3 bis 5 Gew.-%, Isocyanat z.B. in Mengen von 20 bis 50 Gew.% und das erfindungsgemäß einzusetzende Trägermaterial und Polyamin P, insbesondere Guanidinumsetzungsprodukt z. B. in Mengen von 0,00001 bis 5 Gew.-% (vorzugsweise 0,00005 bis 2,5 Gew.-%), enthalten.

Bezüglich bevorzugter Ausführungsformen dieser vorgenannten Zusammensetzungen wird insbesondere mit Blick auf das Trägermaterial und Polyamin P, insbesondere das Guanidinumsetzungsprodukt, auf die vorangegangene Beschreibung verwiesen.

Ein weiterer Gegenstand der Erfindung ist ein Verfahren zur Erniedrigung der Aldehydgesamtemission, vorzugsweise umfassend Emissionen von Formaldehyd, Acetaldehyd, Acrolein, sowie auch aromatischen Aldehyden, wie Benzaldehyd, vorteilhafterweise Aldehydemissionen umfassend Formaldehyd, Acetaldehyd, Acrolein und Benzaldehyd, insbesondere Aldehydemissionen umfassend Formaldehyd und Acetaldehyd aus Polyurethanschaumstoffen durch Zugabe von Trägermaterial und Polyamin P, insbesondere Guanidinumsetzungsprodukten, wie zuvor beschrieben, zu dem Polyurethanschaumstoff, vorzugsweise in einer Menge von 0,001 bis 10 Gew.-%, vorteilhafterweise 0,01 bis 5 Gew.-%, insbesondere 0,1 bis 3 Gew.-% bezogen auf das Gesamtgewicht des Polyurethanschaumstoffs, wobei die Zugabe vor und/oder während der Herstellung des Polyurethanschaumstoffs erfolgen kann.

Ein weiterer Gegenstand der Erfindung ist ein Polyurethanschaumstoff, enthaltend Trägermaterial und Polyamin P, insbesondere Guanidinumsetzungsprodukte, wie zuvor beschrieben, in einer Menge von vorzugsweise 0,001 bis 10 Gew.-%, vorteilhafterweise 0,01 bis 5 Gew.-%, insbesondere 0,1 bis 3 Gew.-% bezogen auf das Gesamtgewicht des Polyurethanschaumstoffs, insbesondere erhältlich durch Zugabe von Trägermaterial und Polyamin P vor und/oder während der Herstellung des Polyurethanschaumstoffs.

Ein weiterer Gegenstand der Erfindung ist die Verwendung von Trägermaterial und Polyamin P, insbesondere Guanidinumsetzungsprodukten, wie zuvor beschrieben, zur Herstellung von Polyurethanschaumstoffen, die emissionsarm bezüglich Aldehyden sind, vorzugsweise umfassend Formaldehyd, Acetaldehyd, Acrolein und Benzaldehyd, insbesondere emissionsarm bezüglich Formaldehyd und Acetaldehyd sind.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele:

**Tabelle 1: Rohstoffe zur Herstellung der Schaumformteile**

| | |
|---|---|
| Polyol A | Polyetherol trifunktionell, MW 6000, Covestro AG |
| Polyol B | Polyetherol trifunktionell, MW 4500, Dow Chemicals |
| Vernetzer | Tegoamin DEOA 85 (Diethanolamin 85% in Wasser), Evonik Industries AG |
| Katalysator 1 | Tegoamin ZE1 (1,1'-{[3-(dimethylamino)propyl]imino}bispropan-2-ol), Evonik Industries AG |
| Katalysator 2 | Tegoamin DMEA (N,N-Dimethylethanolamin), Evonik Industries AG |
| Katalysator 3 | DABCO^{®} NE300 (N-[2-[2-(dimethylamino) ethoxy] ethyl]-N-methyl- 1,3-propanediamine) |
| Silikonstabilisator | Tegostab B 8734 LF 2, Evonik Industries AG |
| Isocyanat | Methylendiisocyanat, Suprasec 2447, NCO=32,6 %, Huntsman |

**Tabelle 2: Verwendete Additive**

| Additive | Beschreibung |
|---|---|
| Additiv 1 | ORTEGOL LA: (Umsetzungsprodukt Triethylentetramin mit Guanidinhydrochlorid), 30%ige wässrige Lösung |
| Additiv 2 | ORTEGOL COM (Kieselsäuredispersion 20 Gew-% hydrophobiertes Aerosil in Glykol (2-(2- Butoxyethoxy)ethanol)) |
| Additiv 3 | Mischung aus ORTEGOL LA und ORTEGOL COM 50:50 |
| Additiv 4 | Mischung aus ORTEGOL LA und ORTEGOL COM 74:26 |
| Additiv 5 | Kieselsäuredispersion 7 Gew-% Aerosil mit ORTEGOL LA als 30%ige wässrige Lösung |

### Herstellung von Kieselsäuredispersionen

Zur Herstellung von Kieselsäuredispersionen werden die zu dispergierende Phase (Kieselsäure) und das Dispersionsmittel (z.B. Glykol) in einem Gefäß (z.B. Edelstahlbecher) vorgelegt und mit einer Dissolverscheibe (d= 6 cm) für 30 min bei 5000 U/m dispergiert. Die Verwendung eines Vakuumdispermaten wirkt einer möglichen Schaumbildung, die durch Lufteintrag während des Dispergiervorgangs hervorgerufen werden kann, entgegen.

Herstellung von HR Polyurethan-Schäumen mittels einer Hochdruckverschäummaschine.

Die Durchführung der Verschäumungen erfolgte mittels einer Hochdruckverschäummaschine des Typs Henneke HK 270, die mit einem MQ-Mischkopf ausgestattet ist. Zur Simulierung eines besonders anwendungsnahen Kaltschaumsystems wurden die in Tabelle 1 und 2 angegebenen Rohstoffe eingesetzt. Die verwendeten Einsatzmengen der jeweiligen Edukte können Tabelle 3 und 4 entnommen werden. Das Reaktionsgemisch wurde in eine auf 55°C temperierte Kastenform (Abmessungen 40×40×10cm), die zuvor mit einem Trennmittel (Gorapur LK 8931-6 HW) behandelt wurde mittels des Mischkopfes eingefüllt und diese dann verschlossen. Der fertige Schaum wurde nach 4 Minuten entformt. In die Form wurde zur besseren Entformung ein wachsbasiertes Trennmittel mittels einer Sprühpistole appliziert.

Die Verschäummaschine wurde mit den folgenden Parametern betrieben:
Polyolausstoß entspricht der Summe aller Komponenten in der Polyolformulierung (siehe z.B. Tabelle 3 Schaum V1 107,2 g) 107,2 g/s, Isocyanatausstoß (bei Index 75): 45,7 g/s
Dosierzeit: 6s
Mischdruck: Polyolkomponente 150 bar, Isocyanat 160 bar
Rohstofftemperaturen im Tank: Polyol 25°C, Isocyanat 26°C.

Gleich nach dem Entformen wurden die Schäume dem Standard-Force-to-Crush-Test unterzogen.

### FORCE-TO-CRUSH-MESSUNGEN

Mit Force-to-Crush-Messungen wird im Allgemeinen die Offenzelligkeit des Schaums untersucht. Bei der Herstellung von Automobilsitzpolstern ist die Offenzelligkeit der Schäume ein wichtiger Parameter, um die Formstabilität eines Formteils zu gewährleisten und ein Schrumpfen nach der Herstellung zu unterbinden.

Die Messung wurde folgenderweise durchgeführt:
Unmittelbar nach dem Entformen eines Schaumkissens (<15 Sekunden danach) wird das Kissen in die Startposition der FTC-Maschine gegeben, wobei der Messfuß/Messplatte/Messsonde 115 mm von der Bodenplatte entfernt und in Kontakt mit dem Schaum ist und sich mit 500 mm/min. bewegt. Die anfängliche Schaumdicke wird gemessen, wenn die Kraft 5 N erreicht. Ohne bei 5 N zu stoppen, dringt der Messfuß mit 500 mm/min weiter in den Schaum ein, bis eine Entfernung von 50 mm zur Bodenplatte erreicht wird.

An diesem Punkt wird FTC1 genommen. Es gibt keine Messunterbrechung. Der Messfuß kehrt mit 500 mm/min zur Startposition zurück (115 mm von der Bodenplatte) und beendet so den ersten Zyklus. Ohne Verzögerung werden 9 weitere Zyklen abgeschlossen, die mit dem ersten identisch sind. Nach dem 10. Zyklus stoppt der Messfuß in der Startposition. Das Schaumkissen wird nun von Hand vollständig aufgedrückt und danach zurück in die Maschine gegeben. Ein weiterer Zyklus (der 11.) wird unter denselben Bedingungen wie bei den ersten 10 durchgeführt. Die Schaumdicke am Schluss wird nun auf dieselbe Art wie die Schaumdicke am Beginn des ersten Zyklus' gemessen. Die Schaumdicke am Beginn wird nach FTC1 beurteilt, die verbleibende Geschlossenzelligkeit wird durch die Differenz FTC10 - FTC11 beschrieben und die Aufdrückbarkeit des Schaumes wird aus der Form der Kurve (wie schnell FTC abfällt) abgelesen. FTC11 (Härte des frischen Schaums) kann als Maß für die Schaumaushärtung verwendet werden.

Geräteparameter der Prüfmaschine:
Universalprüfmaschine Typ H10K-S
Hersteller: Tinius Olsen
Herstellernummer: 672
Maximaler Messwert: 10 kN

Messung der Eindruckhärte (ILD - Indentation Load Defection, Härte bei 40% Stauchung) nach DIN EN ISO 2439:2009-05:
Die Eindruckhärte weich-elastischer Schaumstoffe ist ein Maß für deren Belastungseigenschaften. Diese oben genannte Internationale Norm legt vier Verfahren (A bis D) zur Bestimmung der Eindruckhärte und ein Verfahren (E) zur Bestimmung des Druckverformungskoeffizienten und des Hystereseverlustes von weich-elastischen Schaumstoffen fest. In diesem Falle kommt das Verfahren A zum Einsatz, das wie folgt definiert ist:
Verfahren A - Bestimmung des Eindruckhärte-Index (40 %/30 s), das eine Einzelmessung der Eindrückung für Laborprüfungen liefert.

Es wird die Kraft gemessen, die erforderlich ist, um unter den vorgeschriebenen Bedingungen eine vorgeschriebene Eindrückung zu erzielen. Die Messungen können an derselben Maschine durchgeführt werden, die für die FTC-Messungen verwendet wurde (s.o.).

Das Material darf frühestens 72 h nach Herstellung geprüft werden. Eine reduzierte Reifezeit von 16 h oder 48 h ist jedoch zulässig, wenn nachgewiesen werden kann, dass die mittleren Ergebnisse zu diesen Zeitpunkten weniger als ± 10 % von den 72-h-Werten abweichen. Eine Prüfung nach entweder 16 h oder 48 h zu der festgelegten Zeit ist zulässig, wenn die oben genannten Kriterien erfüllt wurden.

Vor der Prüfung müssen die Probekörper ohne Belastung und Verspannung mindestens 16 h in einem der folgenden Klimate wie in ISO 23529 beschrieben konditioniert werden:
- (23 ± 2) °C, (50 ± 5) % relative Luftfeuchte; oder
- (27 ± 2) °C, (65 ± 5) % relative Luftfeuchte.

Diese Konditionierungszeitspanne darf den abschließenden Teil der Wartezeit nach der Herstellung bilden.

Im Falle der Qualitätskontrolle dürfen Probekörper bereits 12 h oder später nach Herstellung entnommen werden, und die Prüfung darf nach mindestens 6 h Konditionieren in einem der festgelegten Klimate durchgeführt werden.

Der Probekörper wird so auf die Auflageplatte gelegt, dass der Mittelpunkt des Probekörpers oder ein Prüfbereich nach Vereinbarung unter dem Mittelpunkt des Eindruckstempels liegt. Weist der Probekörper auf der einen Seite Hohlräume auf, so ist die Seite mit den Hohlräumen der Auflageplatte zuzuwenden.
a) Im ausgewählten Prüfbereich ist eine Kraft von 5 N aufzubringen und dann die Dicke des Probekörpers zu messen. Dieser Wert gilt als Punkt mit einer Eindrückung gleich Null.
b) Der Probekörper ist nun mit einer Eindrückungsvorschubgeschwindigkeit von (100 ± 20) mm/min bis zu einer Eindrückung von (70 ± 2,5) % der Dicke zu belasten. Nach Erreichen dieser Verformung erfolgt die Entlastung mit dergleichen Geschwindigkeit.
c) Dieser Zyklus von Belastung und Entlastung ist noch zweimal zu wiederholen.

### Bestimmung des Eindruckhärte-Index (40 %/30 s)

Unmittelbar nach der dritten Entlastung ist der Probekörper um (40 ± 1) % seiner Dicke zusammenzudrücken.

Diese Eindrückung ist für eine Zeitdauer von (30 ± 1) s aufrechtzuerhalten. Die Kraft in Newton ist am Ende dieser Zeitspanne zu messen und anschließend ist der Probekörper zu entlasten.

Die nach dem oben beschriebenen Verfahren hergestellten Formschäume wurden des Weiteren in Anlehnung an die VDA 275 (VDA 275 "Formteile für den Fahrzeuginnenraum - Bestimmung der Formaldehydabgabe". Messverfahren nach der modifizierten Flaschen-Methode; Quelle: VDA 275, 07/1994, www.vda.de) auf ihren Formaldehyd- und Acetaldehydgehalt analysiert.

### Messprinzip

Bei der Methode wurden Probekörper einer bestimmten Masse und Abmessung über destilliertem Wasser in einer geschlossenen 1L-Glasflasche befestigt und bei konstanter Temperatur über eine definierte Zeit gelagert. Danach kühlte man die Flaschen ab und bestimmte im destillierten Wasser den absorbierten Formaldehyd und Acetaldehyd. Die ermittelte Formaldehyd- und Acetaldehydmenge wurde auf trockenes Formteilgewicht bezogen (mg/kg).

### Analytik

### Prüfkörper: Probenvorbereitung, Probenahme und Probekörperabmessungen

Nach dem Entformen der Schäume wurden diese 24 Stunden bei 21°C und ca. 50% relativer Luftfeuchte gelagert. Es wurden dann Probekörper gleichmäßig verteilt über die Breite des (abgekühlten) Formteils an geeigneten und repräsentativen Stellen entnommen. Danach wurden die Schäume in eine Aluminium-Folie eingeschlagen und in einem Polyethylenbeutel versiegelt.

Die Größe der Probekörper betrug jeweils 100x40x40mm (ca. 9g). Pro Formteil wurden 3 Probekörper für die Aldehydbestimmung entnommen.

### Durchführung der Prüfung: Formaldehyd-/Acetaldehydabgabe

Direkt nach Erhalt der versiegelten Probekörper wurden diese der Direktbestimmung zugeführt. Die Proben wurden vor Beginn der Analyse auf der Analysenwaage auf 0,001g genau ausgewogen. In die verwendeten Glasflaschen wurden jeweils 50 ml destilliertes Wasser pipettiert. Nach Anbringung der Probekörper in der Glasflasche wurde das Gefäß geschlossen und über 3 Stunden im Wärmeschrank bei einer konstanten Temperatur von 60°C verwahrt. Nach Ablauf der Prüfzeit wurden die Gefäße aus dem Wärmeschrank genommen. Nach 60 Minuten Standzeit bei Raumtemperatur wurden die Probekörper aus der Prüfflasche entfernt. Anschließend erfolgte die Derivatisierung nach der DNPH-Methode (Dinitrophenylhydrazin). Dazu werden 900 µL der Wasserphase mit 100 µL einer DNPH Lösung versetzt. Die DNPH-Lösung ist wie folgt hergestellt: 50mg DNPH in 40 mL MeCN (Acetonitril) werden mit 250 µL HCl (1:10 verd.) angesäuert und auf 50 mL mit MeCN aufgefüllt. Nach der erfolgten Derivatisierung wird eine Probe mittels HPLC analysiert. Es erfolgt eine Auftrennung in die einzelnen Aldehyd-Homologen.

### Geräteparameter HPLC

Es wurde das folgende Gerät für die Analyse verwendet:
Agilent Technologies 1260
Chromatographiesäule: Phenomenex Luna 250*4,6mm C18, 5µ Teilchengröße
Laufmittel: Wasser Acetonitril Gradient
Detektion: UV 365 nm

**Tabelle 3: Formulierung zur Herstellung der Formteile und Ergebnisse der Härte und der Formaldehydmessungen**

| | **V 1** | **V 2** | **EM 1** | **EM 2** | **EM 3** | **EM 4** |
|---|---|---|---|---|---|---|
| Polyol A | 100 | 100 | 100 | 100 | 100 | 100 |
| Polyol B | 1 | 1 | 1 | 1 | 1 | 1 |
| Vernetzer | 0,7 | 0,7 | 0,7 | 0,7 | 0,7 | 0,7 |
| Wasser | 3,6 | 3,3 | 3,3 | 3,3 | 3,3 | 3,3 |
| Katalysator 1 | 0,6 | 0,6 | 0,6 | 0,6 | 0,6 | 0,6 |
| Katalysator 2 | 0,3 | 0,3 | 0,3 | 0,3 | 0,3 | 0,3 |
| Silikonstabilisator | 1 | 1 | 1 | 1 | | |
| Additive 1 | 0 | 1 | 1 | | | |
| Additive 2 | | | 1 | | | |
| Additive 3 | | | | 2 | | |
| Additive 4 | | | | | 1,35 | |
| Additive 5 | | | | | | 1,08 |
| Isocyanat, Index 75 | 45,7 | 45,7 | 45,7 | 45,7 | 45,7 | 45,7 |
| Zellen pro cm | 14 | 12 | 12 | 12 | 12 | 12 |
| ILD Härte 40%, N | 148 | 135 | 148 | 141 | 140 | 142 |
| FTC 1 | 1934 | 1559 | 1804 | 1826 | 1789 | 1810 |
| FTC 10 | 208 | 135 | 185 | 189 | 193 | 190 |
| FTC 11 | 184 | 151 | 179 | 173 | 175 | 182 |
| Formaldehydemissionen, ppm (VDA 275, mod.) | 0,65 | 0,24 | 0,09 | 0,07 | 0,10 | 0,11 |
| Blindwert Formaldehyd, ppm | 0,02 | 0,02 | 0,02 | 0,02 | 0,02 | 0,02 |
| Anteil Aerosil Träger, % | | | 20% Träger | 20% Träger | 7% Träger | 7% Träger |

Die Mengenangaben der Rohstoffe sind in Gramm.

Die Verschäumergebnisse zeigen, dass bei Zusatz des Additives 1 im Vergleich zum Nullschaum ohne Additiv (V1) bereits eine positive Änderung der Formaldehydemissionen (V2) erreicht wird, sich zudem aber auch die Geschlossenzelligkeit (FTC) sehr verschlechtert, sowie auch die ILD Härte. Der Unterschied der FTC 1 Werte von V1 zu V2 beträgt knapp 20%, was als ein signifikanter Einbruch der Geschlossenzelligkeit bewertet werden kann und somit die Prozessfähigkeit der Formulierung stark beeinflusst.

Wird nun zusätzlich zum Additiv 1 auch das Additiv 2 (EM1) hinzugegeben (getrennte Zugabe), zeigt sich eine positive Wirkung in Form einer deutlichen Verringerung der auftretenden Formaldehydemission, die nahe an der Nachweisgrenze liegt. Außerdem lässt sich die Geschlossenzelligkeit (FTC 1-10, 11), sowie die ILD Härte fast auf den Ausgangswert anheben. Dasselbe Ergebnis wird erhalten, wenn Additiv 1 und 2 bereits vorher im selben Mischungsverhältnis gemischt und dann zugegeben werden (EM2).

Das Beispiel EM3 ist dieselbe Mischung wie EM2, allerdings mit niedrigerem Anteil an Trägersubstanz. Hier ist die Verbesserung der Eigenschaften in derselben Größenordnung zu beobachten. Das Beispiel EM4 als Dispersion des Aerosils direkt im Guanidinumsetzungsprodukt (ohne zusätzliches Dispergiermittel, da das Guanidinumsetzungsprodukt hier als solches fungiert), liefert ebenfalls vergleichbar gute Ergebnisse.

Die Verschäumergebnisse zeigen, dass sich durch die erfindungsgemäße Zugabe des Trägermaterials und des Polyamins P PU-Schäume mit verminderten Formaldehydemissionen herstellen lassen, bei denen die ILD Härte und die Prozessfähigkeit, abgebildet durch die Geschlossenzelligkeit (FTC), annähernd auf Ausgangsniveau gehalten werden können.

**Tabelle 4: Formulierung zur Herstellung der Formteile und Ergebnisse der Härte und der Formaldehydmessungen**

| | **V 3** | **V 4** | **EM 5** |
|---|---|---|---|
| Polyol A | 100 | 100 | 100 |
| Polyol B | 1,3 | 1,3 | 1,3 |
| Vernetzer | 0,7 | 0,7 | 0,7 |
| Wasser | 3,4 | 3,4 | 3,4 |
| Katalysator 3 | 0,2 | 0,2 | 0,2 |
| Katalysator 2 | 0,8 | 0,8 | 0,8 |
| Silikonstabilisator | 1 | 1 | 1 |
| Additiv A (ORTEGOL LA 2: Umsetzungsprodukt von 2-Propennitril mit Diethylentriamin) | | 0,4 | |
| Additiv B (Kieselsäuredispersion 7 Gew-% Aerosil mit ORTEGOL LA 2) | | | 0,43 |
| Isocyanat, Index 95 | 55,8 | 55,8 | 55,8 |
| Zellen pro cm | 12 | 7 | 12 |
| ILD Härte 40%, N | 322 | 198 | 307 |
| FTC 1 | 402 | 265 | 344 |
| FTC 10 | 391 | 265 | 350 |
| FTC 11 | 326 | 213 | 289 |
| Formaldehydemissionen, ppm (VDA 275, mod.) | 0,86 | 0,07 | 0,08 |
| Blindwert Formaldehyd, ppm | 0,02 | 0,02 | 0,02 |
| Anteil Aerosil Träger, % | 0 | 0 | 7 |

Die Mengenangaben der Rohstoffe sind in Gramm.

Die Verschäumergebnisse zeigen, dass bei Zusatz des Additives A im Vergleich zum Nullschaum ohne Additiv (V3) bereits eine positive Änderung der Formaldehydemissionen (V4) erreicht wird, sich zudem aber die Geschlossenzelligkeit (FTC) sehr verschlechtert, in diesem Fall also niedriger wird, sowie auch die ILD Härte. Der Unterschied der FTC 1 Werte von V3 zu V4 beträgt hier sogar über 30%, was als ein signifikanter Einbruch der Geschlossenzelligkeit bewertet werden kann und somit die Prozessfähigkeit der Formulierung stark beeinflusst.

Wird nun anstelle des Additiv A das erfindungsgemäße Additiv B (EM5) hinzugegeben (bereits fertig dispergierte Variante), zeigt sich weiterhin die positive Wirkung in Form verringerter Formaldehydemission, hier aber besonders eine verbesserte Geschlossenzelligkeit (FTC 1-10, 11), sowie die ILD Härte, die fast auf den Ausgangswert zurückkommt.

Die Verschäumergebnisse zeigen, dass sich durch die erfindungsgemäße Zugabe des Trägermaterials und des Polyamins P PU-Schäume mit verminderten Formaldehydemissionen herstellen lassen, bei denen die ILD Härte und die Prozessfähigkeit, abgebildet durch die Geschlossenzelligkeit (FTC), annähernd auf Ausgangsniveau gehalten werden können.

## Patentansprüche

1. Verfahren zur Herstellung von Polyurethanschaum durch Umsetzung mindestens einer Polyolkomponente mit mindestens einer Isocyanatkomponente in Gegenwart eines oder mehrerer Katalysatoren, die die Reaktionen Isocyanat-Polyol und/oder Isocyanat-Wasser und/oder die Isocyanat-Trimerisierung katalysieren, **dadurch gekennzeichnet, dass** die Umsetzung in Gegenwart eines Trägermaterials und Polyamin P durchgeführt wird, wobei das Polyamin P ausgewählt ist aus
(i) einem Umsetzungsprodukt aus einem Guanidinsalz und einem Polyamin,
oder
(i) einem Umsetzungsprodukt aus einem ungesättigten Nitril und einem aliphatischen Polyamin mit mindestens zwei oder mehr Amingruppen.

2. Verfahren nach Anspruch 1, **dadurch gekennzeichnet, dass** als Trägermaterial pyrogene Kieselsäure oder gefällte Kieselsäure verwendet wird.

3. Verfahren gemäß einem der vorigen Ansprüche, **dadurch gekennzeichnet, dass** das Polyamin P aus der Umsetzung eines Guanidinsalzes mit einem Polyamin resultiert, insbesondere aus der Umsetzung mit einer Verbindung der Formel (I),
H₂N-CH₂-CH₂-NH-(CH₂-CH₂-NH)ₓ-CH₂-CH₂-NH₂ (I)
mit
x = 0 bis 4, vorzugsweise 1 bis 3, insbesondere 1,
wobei bei der Umsetzung des Guanidinsalzes mit dem Polyamin das molare Verhältnis von Guanidinsalzen zu den Polyaminen 5 zu 1 bis 1 zu 5, bevorzugt 1 zu 1 bis 1 zu 3, insbesondere 2 zu 3 bis 1 zu 3 beträgt.

4. Verfahren gemäß einem der vorigen Ansprüche, **dadurch gekennzeichnet, dass** als Polyamin P eine Verbindung der Formel (II) eingesetzt wird,
H[-(HN-CH₂-CH₂)ₐ-NH-C(=NHR⁺X⁻)]_{c}-NH-(CH₂-CH₂-NH-)_{b}H (II)
die durch Umsetzung eines Guanidinsalzes mit einer Verbindung der Formel (I) erhältlich ist,
wobei
a = unabhängig voneinander 0 bis 6, vorteilhafterweise 2 bis 6, vorzugsweise 3 bis 5, insbesondere 3 oder 4
b = unabhängig voneinander 0 bis 6, vorteilhafterweise 2 bis 6, vorzugsweise 3 bis 5, insbesondere 3 oder 4
c = unabhängig voneinander 1 bis 4, vorzugsweise 1 oder 2, bevorzugt 1,
R = H oder (CH₂-CH₂-NH-)_{d}H, insbesondere H,
d = unabhängig voneinander 0 bis 6, vorteilhafterweise 2 bis 6, vorzugsweise 3 bis 5, insbesondere 3 oder 4,
a und b können gleich 0 sein, wenn d > 0 und R ungleich H, oder d und b können gleich 0 sein, wenn a > 0, oder d und a können gleich 0 sein, wenn b > 0 ist,
X- = Anion, bevorzugt ein Halogenid, besonders Chlorid,
wobei es besonders bevorzugt ist,
wenn in der Verbindung der Formel (II) a = b ist, mit a = b = 2 bis 6, vorzugsweise 3 bis 5, insbesondere 3 oder 4, wobei c vorzugweise gleich 1 oder 2 ist und R vorzugsweise = H ist.

5. Verfahren gemäß Anspruch 1 oder 2, **dadurch gekennzeichnet, dass** als Polyamin P das Umsetzungsprodukt aus einem ungesättigten Nitril und einem aliphatischen Polyamin mit mindestens zwei oder mehr Amingruppen, vorzugsweise drei oder mehr Amingruppen eingesetzt wird, wobei als ungesättigtes Nitril insbesondere 2-Propennitril eingesetzt wird, und als aliphatisches Polyamin Diethylentriamin, Triethylentetramin, Tetraethylenpentamin, Pentaethylenhexamin, Hexaethylenheptamin und/oder Hexamethylendiamin eingesetzt wird, wobei das Umsetzungsprodukt von 2-Propennitril mit Dietehylentriamin besonders bevorzugt ist.

6. Verfahren nach mindestens einem der vorangegangenen Ansprüche, **dadurch gekennzeichnet, dass** das Trägermaterial und Polyamin P in einem Massenanteil von zusammen 0,01 bis 10 Teilen, vorzugsweise von 0,1 bis 5 insbesondere von 0,1 bis 3,5 bezogen auf 100 Teile Polyolkomponente eingesetzt werden.

7. Verfahren nach mindestens einem der vorangegangenen Ansprüche, **dadurch gekennzeichnet, dass**
(i) das Polyamin P und das Trägermaterial getrennt voneinander zu der Reaktionsmischung, die zur Herstellung des Polyurethan-Systems dient, gegeben werden, wobei das Trägermaterial vorzugsweise in einer Flüssigkeit dispergiert ist,
(ii) das Polyamin P und das Trägermaterial vor der Zugabe zu der Reaktionsmischung, die zur Herstellung des Polyurethan-Systems dient, miteinander vermischt werden.

8. Polyurethanschaum, hergestellt gemäß einem Verfahren nach einem der Ansprüche 1 bis 7.

9. Polyurethanschaum nach Anspruch 8, **dadurch gekennzeichnet, dass** es von 0,001 bis 10 Gew.-%, vorzugsweise 0,01 bis 5 Gew.-%, insbesondere 0,1 bis 3 Gew.-% an Trägermaterial und Polyamin P aufweist.

10. Polyurethanschaum nach einem der Ansprüche 8 oder 9, **dadurch gekennzeichnet, dass** der Polyurethanschaum ein Polyurethanhartschaum, ein Polyurethanweichschaum, ein viskoelastischer PU-Schaum, ein Polyurethan HR-Schaum, ein halbharter Polyurethanschaum, ein thermoverformbarer Polyurethanschaum oder ein PU-Integralschaum, bevorzugt ein Polyurethan HR-Schaum ist.

11. Verwendung von Polyurethanschäumen gemäß zumindest einem der Ansprüche 8 bis 10 als Kühlschrankisolierung, Dämmplatte, Sandwichelement, Rohrisolation, Sprühschaum, 1- & 1,5-Komponenten-Dosenschaum, Holzimitat, Modellschaum, Verpackungsschaum, Matratze, Möbelpolster, Automobil-Sitzpolster, Kopfstütze, Instrumententafel, Automobil-Innenverkleidung, Automobil-Dachhimmel, Schallabsorptionsmaterial, Lenkrad, Schuhsole, Teppichrückseitenschaum, Filterschaum, Dichtschaum, Dichtmittel und Kleber, Beschichtung oder zur Herstellung entsprechender Produkte.

12. Verfahren zur Erniedrigung der Aldehydgesamtemission, insbesondere Aldehydemissionen umfassend Formaldehyd, Acetaldehyd, Acrolein und Benzaldehyd, aus Polyurethanschaumstoffen, durch Zugabe von Trägermaterial und Polyamin P, wie in einem der vorigen Ansprüche angegeben, zu dem Polyurethanschaumstoff, vorzugsweise in einer Menge von 0,001 bis 10 Gew.-%, vorteilhafterweise 0,01 bis 5 Gew.-%, insbesondere 0,1 bis 3 Gew.-%, bezogen auf das Gesamtgewicht des Polyurethanschaumstoffs, wobei die Zugabe vor und/oder während der Herstellung des Polyurethanschaumstoffs, erfolgen kann.

13. Verwendung von Trägermaterial und Polyamin P, wie in einem der vorigen Ansprüche angegeben, zur Herstellung von Polyurethanschaumstoffen, die emissionsarm bezüglich Aldehyden sind, insbesondere umfassend Formaldehyd, Acetaldehyd, Acrolein und Benzaldehyd.

## Claims

1. Process for production of polyurethane foam by reacting at least one polyol component with at least one isocyanate component in the presence of one or more catalysts for the isocyanate-polyol and/or isocyanate-water reactions and/or the trimerization of isocyanate, **characterized in that** said reacting is carried out in the presence of a carrier material and polyamine P, where the polyamine P is selected from
(i) a reaction product of a guanidine salt and a polyamine, or
(ii) a reaction product of an unsaturated nitrile and an aliphatic polyamine having at least two or more amine groups.

2. Process according to Claim 1, **characterized in that** the carrier material used is fumed silica or precipitated silica.

3. Process according to either of the preceding claims, **characterized in that** the polyamine P results from the reaction of a guanidine salt with a polyamine, especially from the reaction with a compound of the formula (I)
H₂N-CH₂-CH₂-NH-(CH₂-CH₂-NH)ₓ-CH₂-CH₂-NH₂ (I)
where
x = 0 to 4, preferably 1 to 3, especially 1,
wherein said reaction of the guanidine salt with the polyamine is carried out with a molar ratio of guanidine salts to the polyamines of 5:1 to 1:5, preferably 1:1 to 1:3 and especially 2:3 to 1:3.

4. Process according to any of the preceding claims, **characterized in that** the polyamine P used is a compound of formula (II)
H[-(HN-CH₂-CH₂)ₐ-NH-C(=NHR⁺X⁻)]_{c}-NH-(CH₂-CH₂-NH-)_{b}H (II)
which is obtainable by reacting a guanidine salt with a compound of formula (I),
where
a = independently 0 to 6, advantageously 2 to 6, preferably 3 to 5, especially 3 or 4
b = independently 0 to 6, advantageously 2 to 6, preferably 3 to 5, especially 3 or 4
c = independently 1 to 4, preferably 1 or 2, preferably 1,
R = H or (CH₂-CH₂-NH-)_{d}H, in particular H,
d = independently 0 to 6, advantageously 2 to 6, preferably 3 to 5, in particular 3 or 4,
a and b may each be 0 when d > 0 and R is not H, or d and b may each be 0 when a > 0, or d and a may each be 0 when b > 0,
X- = anion, preferably a halide, particularly chloride,
where, with particular preference,
in the compound of formula (II), a = b, with a = b = 2 to 6, preferably 3 to 5, in particular 3 or 4, while c is preferably equal to 1 or 2 and R is preferably = H.

5. Process according to Claim 1 or 2, **characterized in that** the polyamine P used is the reaction product of an unsaturated nitrile and an aliphatic polyamine having at least two or more amine groups, preferably three or more amine groups, where the unsaturated nitrile used is in particular 2-propenenitrile, and the aliphatic polyamine used is diethylenetriamine, triethylenetetramine, tetraethylenepentamine, pentaethylenehexamine, hexaethyleneheptamine and/or hexamethylenediamine, particular preference being given to the reaction product of 2-propenenitrile with diethylenetriamine.

6. Process according to at least one of the preceding claims, **characterized in that** the carrier material and polyamine P are used in a mass fraction of in total 0.01 to 10 parts, preferably of 0.1 to 5 especially of 0.1 to 3.5 based on 100 parts of polyol component.

7. Process according to at least one of the preceding claims, **characterized in that**
(i) the polyamine P and the carrier material are added separately from one another to the reaction mixture which serves to produce the polyurethane system, the carrier material preferably having been dispersed in a liquid,
(ii) the polyamine P and the carrier material are mixed with one another prior to the addition to the reaction mixture which serves to produce the polyurethane system.

8. Polyurethane foam obtainable by a process according to any of Claims 1 to 7.

9. Polyurethane foam according to Claim 8, **characterized in that** it includes from 0.001 to 10 wt%, preferably 0.01 to 5 wt%, especially 0.1 to 3 wt%, of carrier material and polyamine P.

10. Polyurethane foam according to either Claim 8 or 9, **characterized in that** the polyurethane foam is a rigid polyurethane foam, a flexible polyurethane foam, a viscoelastic PU foam, an HR polyurethane foam, a semi-rigid polyurethane foam, a thermoformable polyurethane foam or an integral PU foam, preferably an HR polyurethane foam.

11. Use of polyurethane foams according to one or more of Claims 8 to 10 as refrigerator insulation, insulation panel, sandwich element, pipe insulation, spray foam, 1- and 1.5-component can foam, wood imitation, modelling foam, packaging foam, mattress, furniture cushioning, automotive seat cushioning, headrest, dashboard, automotive interior, automotive roof liner, sound absorption material, steering wheel, shoe sole, carpet backing foam, filter foam, sealing foam, sealant and adhesive, coating or for producing corresponding products.

12. Process for reducing aldehyde total emission, in particular aldehyde emissions comprising formaldehyde, acetaldehyde, acrolein and benzaldehyde, from polyurethane foams by admixture to the polyurethane foam of carrier material and polyamine P, as recited in any of the preceding claims, preferably in an amount of 0.001 to 10 wt%, advantageously 0.01 to 5 wt%, especially 0.1 to 3 wt%, based on the overall weight of the polyurethane foam, wherein the admixture may take place before and/or during the production of the polyurethane foam.

13. Use of carrier material and polyamine P, as recited in any of the preceding claims for production of polyurethane foams that are low-emission with regard to aldehydes including, in particular, formaldehyde, acetaldehyde, acrolein and benzaldehyde.

## Revendications

1. Procédé de fabrication d'une mousse de polyuréthane par réaction d'au moins un composant polyol avec au moins un composant isocyanate en présence d'un ou plusieurs catalyseurs qui catalysent les réactions isocyanate-polyol et/ou isocyanate-eau et/ou la trimérisation des isocyanates, **caractérisé en ce que** la réaction est mise en œuvre en présence d'un matériau support et d'une polyamine P, la polyamine P étant choisie parmi
(i) un produit de réaction d'un sel de guanidine et d'une polyamine, ou
(i) un produit de réaction d'un nitrile insaturé et d'une polyamine aliphatique ayant au moins deux groupes amine ou plus.

2. Procédé selon la revendication 1, **caractérisé en ce qu'**on utilise comme matériau support de la silice pyrogène ou de la silice précipitée.

3. Procédé selon l'une des revendications précédentes, **caractérisé en ce que** la polyamine P résulte de la réaction d'un sel de guanidine avec une polyamine, en particulier de la réaction avec un composé de Formule (I) ,
H₂N-CH₂-CH₂-NH-(CH₂-CH₂-NH)ₓ-CH₂-CH₂-NH₂ (I)
dans laquelle
x = 0 à 4, de préférence 1 à 3, en particulier 1,
dans lequel, lors de la réaction du sel de guanidine avec la polyamine, le rapport en mole des sels de guanidine aux polyamines est de 5:1 à 1:5, de préférence de 1:1 à 1:3, en particulier de 2:3 à 1:3.

4. Procédé selon l'une des revendications précédentes, **caractérisé en ce qu'**on utilise comme polyamine P un composé de Formule (II)
H[-(HN-CH₂-CH₂)ₐ-NH-C(=NHR⁺X⁻)]_{c}-NH-(CH₂-CH₂-NH-)_{b}H (II)
qui peut être obtenu par réaction d'un sel de guanidine avec un composé de Formule (I),
dans laquelle
a = indépendamment l'un de l'autre 0 à 6, avantageusement 2 à 6, de préférence 3 à 5, en particulier 3 ou 4,
b = indépendamment l'un de l'autre 0 à 6, avantageusement 2 à 6, de préférence 3 à 5, en particulier 3 ou 4,
c = indépendamment l'un de l'autre 1 à 4, de préférence 1 ou 2, préférentiellement 1,
R = H ou (CH₂-CH₂-NH-)_{d}H, en particulier H,
d = indépendamment l'un de l'autre 0 à 6, avantageusement 2 à 6, de préférence 3 à 5, en particulier 3 ou 4,
a et b peuvent être égaux à 0 quand d > 0 et R est différent de H, ou d et b peuvent être égaux à 0 quand a > 0, ou d et a peuvent être égaux à 0 quand b > 0,
X⁻ = un anion, de préférence un halogénure, en particulier le chlorure,
dans laquelle il est particulièrement préféré, dans le composé de Formule (II), a soit égal à b, avec a = b = 2 à 6, de préférence 3 à 5, en particulier 3 ou 4, c étant de préférence égal à 1 ou 2 et R étant de préférence = H.

5. Procédé selon la revendication 1 ou 2, **caractérisé en ce qu'**on utilise comme polyamine P le produit de la réaction d'un nitrile insaturé et d'une polyamine aliphatique ayant au moins deux groupes amine ou plus, de préférence trois groupes amine ou plus, dans lequel on utilise comme nitrile insaturé en particulier du 2-propènenitrile, et on utilise en tant que polyamine aliphatique la diéthylènetriamine, la triéthylènetétramine, la tétraéthylènepentamine, la pentaéthylènehexamine, l'hexaéthylèneheptamine et/ou l'hexaméthylènediamine, le produit de la réaction de 2-propènenitrile avec de la diéthylènetriamine étant particulièrement préféré.

6. Procédé selon au moins l'une des revendications précédentes, **caractérisé en ce que** le matériau support et la polyamine P sont utilisés selon une proportion totale en masse de 0,01 à 10 parties, de préférence de 0,1 à 5, en particulier de 0,1 à 3,5, pour 100 parties du composant polyol.

7. Procédé selon au moins l'une des revendications précédentes, **caractérisé en ce que**
(i) on introduit la polyamine P et le matériau support, séparément l'un de l'autre, dans le mélange réactionnel qui sert à la fabrication du système de polyuréthane, le matériau support étant de préférence dispersé dans un liquide,
(ii) on mélange l'un à l'autre la polyamine P et le matériau support avant addition au mélange réactionnel qui sert à la fabrication du système de polyuréthane.

8. Mousse de polyuréthane fabriquée par un procédé selon l'une des revendications 1 à 7.

9. Mousse de polyuréthane selon la revendication 8, **caractérisée en ce qu'**elle comprend 0,001 à 10 % en poids, de préférence 0,01 à 5 % en poids, en particulier 0,1 à 3 % en poids du matériau support et de la polyamine P.

10. Mousse de polyuréthane selon l'une des revendications 8 ou 9, **caractérisée en ce que** la mousse de polyuréthane est une mousse rigide de polyuréthane, une mousse souple de polyuréthane, une mousse viscoélastique de PU, une mousse de polyuréthane HR, une mousse de polyuréthane semi-rigide, une mousse de polyuréthane thermoformable ou une mousse intégrale de PU, de préférence une mousse de polyuréthane HR.

11. Utilisation de mousses de polyuréthane selon au moins l'une des revendications 8 à 10 en tant qu'isolation pour réfrigérateur, plaque isolante, élément sandwich, isolation de tuyaux, mousse pistolée, mousse en bombe 1 et 1,5 composants, imitation de bois, mousse pour modèles, mousse d'emballage, matelas, rembourrage de meubles, rembourrage pour sièges d'automobile, appui-tête, tableau de bord, garniture intérieure de carrosserie automobile, garniture de toit pour automobile, matériau absorbant acoustique, volant, semelle de chaussure, mousse pour envers de tapis, mousse filtrante, mousse d'étanchéité, agent d'étanchéité et adhésif, revêtement, ou pour la fabrication des produits correspondants.

12. Procédé de diminution des émissions totales d'aldéhydes, en particulier des émissions d'aldéhydes comprenant le formaldéhyde, l'acétaldéhyde, l'acroléine et le benzaldéhyde, à partir de mousses de polyuréthane, par addition d'un matériau support et d'une polyamine P tels qu'indiqués dans l'une des revendications précédentes à la mousse de polyuréthane, de préférence en une quantité de 0,001 à 10 % en poids, avantageusement de 0,01 à 5 % en poids, en particulier de 0,1 à 3 % en poids, par rapport au poids total de la mousse de polyuréthane, l'addition pouvant se faire avant et/ou pendant la fabrication de la mousse de polyuréthane.

13. Utilisation d'un matériau support et de polyamine P tels qu'indiqués dans l'une des revendications précédentes pour la fabrication de mousses de polyuréthane qui émettent peu d'aldéhydes, en particulier de formaldéhyde, d'acétaldéhyde, d'acroléine et de benzaldéhyde.
